# EUROPÄISCHE PATENTSCHRIFT

(11) **EP 2 864 373 B1**
(45) Veröffentlichungstag und Bekanntmachung des Hinweises auf die Patenterteilung: **09.12.2015**
(21) Anmeldenummer: 13726690.4
(22) Anmeldetag: 04.06.2013
(51) Int. Cl.: C08F 8/14, C08F 8/32, C08F 8/44, C08F 267/04, C08F 283/06, C08F 293/00, C08F 210/14, C08F 212/08, C08F 220/06, C08G 81/02, C09D 187/00, C08L 51/00, C09D 151/00, C08L 87/00

(54) **IONISCHE HAFTGRUPPEN ENTHALTENDE KAMMCOPOLYMERE**
IONIC ADHESIVE GROUPS CONTAINING COMB COPOLYMERS
COPOLYMÈRE EN PEIGNE CONTENANT DES GROUPES D'ADHÉSION IONIQUE

(30) Priorität: 21.06.2012 EP 12004659
(43) Veröffentlichungstag der Anmeldung: 29.04.2015
(73) Patentinhaber: BYK-Chemie GmbH, 46483 Wesel (DE)
(72) Erfinder: GÖBELT, Bernd, 46487 Wesel (DE); OMEIS, Jürgen, 46286 Dorsten-Lembeck (DE); NAGELSDIEK, René, 46499 Hamminkeln (DE); MEICHSNER, Marcus, 47475 Kamp-Lintfort (DE)
(86) Internationale Anmeldenummer: PCT/EP2013/001626
(87) Internationale Veröffentlichungsnummer: WO 2013/189568

(56) Entgegenhaltungen:
- EP-A1- 1 026 178
- EP-A1- 1 640 389
- DE-A1-102006 062 441
- DE-A1-102008 021 511
- DE-A1-102008 041 790

## Beschreibung

Die vorliegende Erfindung betrifft ein Copolymer, die Herstellung des Copolymers, eine Dispersion, eine Partikelzubereitung sowie die Verwendung des Copolymers.

Kammcopolymere mit unterschiedlichen Seitenkettentypen werden häufig als Netz- und Dispergiermittel für Partikel enthaltende Dispersionen eingesetzt. In der Regel enthalten derartige Kammpolymere einen verhältnismäßig geringen Gewichtsanteil an mit Partikeloberflächen wechselwirkenden Haftgruppenseitenketten, da diese gegenüber den anderen Seitenketten zwecks Gewährleistung der Stabilität der Dispersion ein verhältnismäßig niedriges Molekulargewicht aufweisen sollten. Andererseits wirkt oft auch ein zu kleiner Haftgruppenanteil der Stabilisierung der Partikeldispersionen entgegen.

Ein typischer Kammcopolymertyp mit entsprechend unterschiedlichen Seitenketten, der als Netz- und Dispergiermittel einsetzbar ist, basiert auf Copolymeren mit Struktureinheiten von monoethylenisch ungesättigten Dicarbonsäuren oder deren Anhydriden. Häufige Vertreter dieses Typs sind Kammcopolymere auf Basis von sog. Styrol/Maleinsäureanhydrid-Harzen (SMA-Harzen).

US 7 078 464 beschreibt Netz- und Dispergiermittel vom SMA-Harztyp, die durch Pfropfung von SMA-Harzen mit Polyetheraminen und Dialkylaminoalkylaminen herstellbar sind. Durch nachträgliche Versalzung der freien Aminogruppen mit ungesättigten Carbonsäuren entstehen Bernsteinsäureimidsubstrukturen.

WO 2008/080580 betrifft Netz- und Dispergiermittel auf der Basis von mit Polyethermonoaminen und Dialkylaminoalkylaminen umgesetzten SMA-Harzen, wobei die entstehenden Haftgruppen, welche in Form von tertiären Aminogruppen vorliegen, zumindest teilweise quarternisiert werden können. In der WO 2008/122606 werden ähnliche SMA-Harztypen mit einem niedrigen relativen Anteil an Maleinsäureanhydridstrukureinheiten beschrieben. In den Dokumenten DE-A 10 2008 021511, EP-A 1 640 389, EP-A 1 026 178 sowie DE-A 10 2008 041790 sind entsprechend weitere ähnliche Copolymertypen/ Anwendungen beschrieben.

Die vorstehend genannten Kammcopolymere werden zwar in der Praxis erfolgreich als Netz- und Dispergiermittel eingesetzt, wobei jedoch deren stabilisierende Wirkung in Partikel enthaltenden Dispersionen noch weiter verbessert werden soll.

Aufgabe der vorliegenden Erfindung ist somit die Bereitstellung eines qualitativ hochwertigen Netz- und Dispergiermittels mit besonders guten Eigenschaften bezüglich der Stabilisierung von Partikel enthaltenden Dispersionen.

Die Lösung dieser Aufgabe ist ein Copolymer enthaltend
i) 40-73 Mol-% einer Basisstruktureinheit (A) sowie
ii) 27-60 Mol-% einer substituierten Dicarbonsäurederivatstruktureinheit (B),
wobei die Basisstruktureinheit (A) durch Umsetzung eines eine olefinische Doppelbindung enthaltenden Monomers (a) erzeugt wird sowie keine unter die Dicarbonsäurederivatstruktureinheit (B) fallende Spezies umfasst,
die substituierte Dicarbonsäurederivatstruktureinheit (B) vorliegt gemäß einer oder mehrerer der allgemeinen Formeln aus der Gruppe bestehend aus (I-1), (I-2), (I-3), (I-4), (I-5), (I-6), (II-1), (II-2), (II-3), (III-1), (III-2), (III-3), (IV-1) sowie (IV-2) 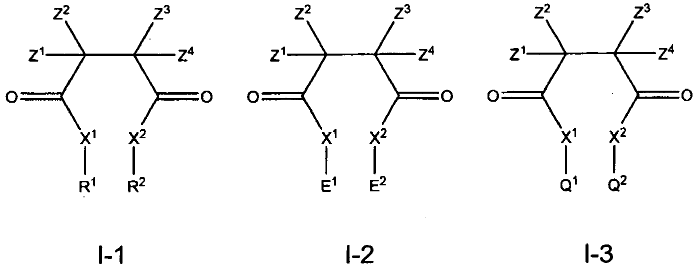 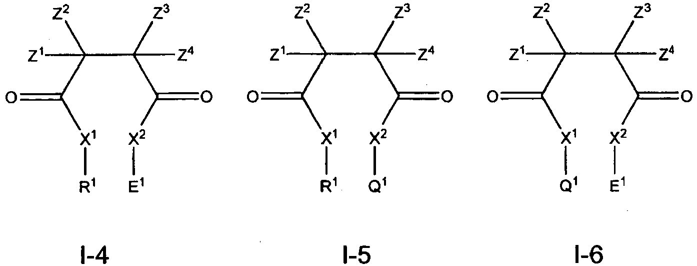 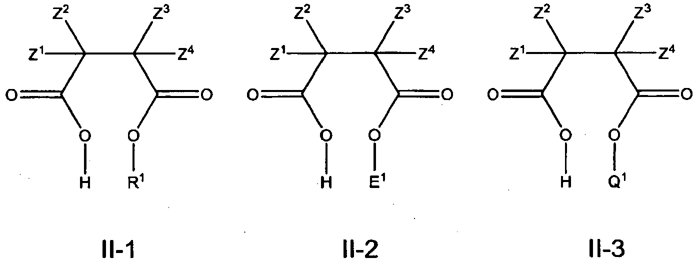 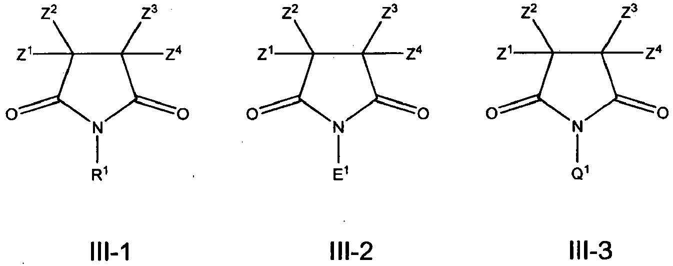 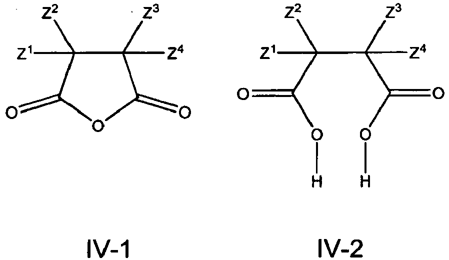 mit
Z1, Z2, Z3 und Z4 jeweils gleich oder verschieden sowie jeweils unabhängig voneinander repräsentiert durch Wasserstoff, einen linearen C₁-C₄-Alkylrest und/ oder Polymerhauptketteverknüpfungsstellen, mit der Maßgabe, dass pro allgemeiner Formel genau zwei Polymerhauptketteverknüpfungsstellen vorliegen,
X¹ und X² jeweils gleich oder verschieden sowie jeweils unabhängig voneinander repräsentiert durch NH und/oder O,
R¹ und R² jeweils gleich oder verschieden sowie jeweils unabhängig voneinander repräsentiert durch einen verzweigten oder unverzweigten, gesättigten oder ungesättigten, mindestens vier Kohlenstoffatome sowie mindestens drei Sauerstoffatome enthaltenden organischen Rest, der keine Aminfunktionen und keine Ammoniumfunktionen aufweist,
E¹ und E² jeweils gleich oder verschieden sowie jeweils unabhängig voneinander repräsentiert durch einen N,N-disubstituierten Aminrest der allgemeinen Formel (V-E) 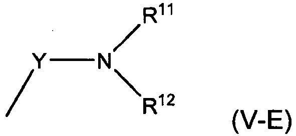 mit
   R¹¹, R¹² jeweils gleich oder verschieden sowie jeweils unabhängig voneinander repräsentiert durch eine substituierte oder nicht substituierte verzweigte oder unverzweigte C₁-C₂₄ -Alkylgruppe, durch eine substituierte oder nicht substituierte C₄-C₁₀ - Zykloalkylgruppe, durch eine substituierte oder nicht substituierte C₆-C₁₈-Arylgruppe und/ oder eine substituierte oder nicht substituierte verzweigte oder unverzweigte C₇-C₁₈ -Arylalkylgruppe, wobei R¹¹ und R¹² zusammen mit dem R¹¹ und R¹² verbindenden N-Atom gemeinsam eine aromatische oder aliphatische, substituierte oder nicht substituierte, zyklische C₃-C₁₀ - Gruppe ausbilden können,
   Y gleich oder verschieden sowie repräsentiert durch eine substituierte oder nicht substituierte verzweigte oder unverzweigte C₁-C₂₄ - Alkylengruppe und/ oder eine substituierte oder nicht substituierte C₆-C₁₈-Arylengruppe
Q¹ und Q² jeweils gleich oder verschieden sowie jeweils unabhängig voneinander repräsentiert durch einen quartären Ammoniumrest der allgemeinen Formel (V-Q) 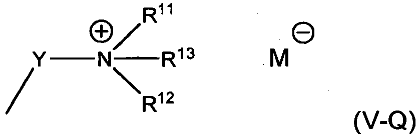 mit
   R¹¹, R¹² der gleichen Entsprechung wie in der allgemeinen Formel (V-E),
   Y der gleichen Entsprechung wie in der allgemeinen Formel (V-E),
   R¹³ gleich oder verschieden sowie repräsentiert durch Wasserstoff, durch eine substituierte oder nicht substituierte verzweigte oder unverzweigte C₁-C₂₄ -Alkylgruppe, durch eine substituierte oder nicht substituierte C₄-C₁₀ - Zykloalkylgruppe, durch eine substituierte oder nicht substituierte C₆-C₁₈ -Arylgruppe und/ oder eine substituierte oder nicht substituierte verzweigte oder unverzweigte C₇-C₁₈ - Arylalkylgruppe,
   M⁻ gleich oder verschieden sowie repräsentiert durch ein Anion,
   wobei der molare Anteil der Struktureinheiten, welche der Gruppe bestehend aus (I-1), (I-2), (I-3), (I-4), (I-5) sowie (I-6) zugehören bezogen auf die Gesamtheit der Struktureinheiten, die der Dicarbonsäurederivatstruktureinheit (B) zuzurechnen sind, 5 - 100 % beträgt,
   der molare Anteil der Struktureinheiten, welche der Gruppe bestehend aus (I-2), (I-3), (I-4), (I-5), (I-6), (II-2), (II-3), (II-2) sowie (III-3) zugehören bezogen auf die Gesamtheit der Struktureinheiten, die der Dicarbonsäurederivatstruktureinheit (B) zuzurechnen sind, 5 - 100 % beträgt und
   bezüglich der Dicarbonsäurederivatstruktureinheit (B) der molare Anteil der Substituenten, welche der Gruppe bestehend aus Q¹ sowie Q² angehören bezogen auf die Gesamtheit der Substituenten, die der Gruppe bestehend aus E¹, E², Q¹ sowie Q² angehören, 10 - 100 % beträgt.

Das erfindungsgemäße Copolymer kann je nach dessen Umgebung vollständig oder teilweise versalzt vorliegen.

Mit der Aussage " Z1, Z2, Z3 und Z4 jeweils gleich oder verschieden sowie jeweils unabhängig voneinander repräsentiert durch Wasserstoff, einen linearen C₁-C₄-Alkylrest und/ oder Polymerhauptketteverknüpfungsstellen, mit der Maßgabe, dass pro allgemeiner Formel genau zwei Polymerhauptketteverknüpfungsstellen vorliegen" wird zum Ausdruck gebracht, dass die Spezies der Dicarbonsäurederivatstruktureinheit (B) bivalente Struktureinheiten sind, die jeweils entweder auf Basis von Maleinsäurederivaten oder auf Basis von Itakonsäurederivaten vorliegen.

Im Falle eines einpolymerisierten Maleinsäurederivats sind entweder Z1 oder Z2 und entweder Z3 oder Z4 als Konnektivitäten (Verknüpfungen in der Kette) vorhanden. Dies entspricht einer bevorzugten Ausführungsform der Erfindung und ist in der Regel bei allen Spezies der Dicarbonsäurederivatstruktureinheit (B) verwirklicht.

Im Falle eines einpolymerisierten Itakonsäurederivats sind hingegen entweder Z1 und Z2 oder alternativ Z3 und Z4 als Konnektivitäten vorhanden. Grundsätzlich besteht auch die Möglichkeit, dass das erfindungsgemäße Copolymer sowohl entsprechende Maleinsäurederivate als auch entsprechende Itakonsäurederivate aufweist.

Das erfindungsgemäße Copolymer ist eine qualitativ hochwertiges Netz- und Dispergiermittel, insbesondere für feste Partikel, wie Pigmente und Füllstoffe (Grenzfläche flüssig-fest).

Die besonders gute universelle Einsetzbarkeit als Netz- und Dispergiermittel des erfindungsgemäßen Copolymers wird ganz wesentlich durch die im erfindungsgemäßen Copolymer enthaltenen zweifach substituierten Dicarbonsäurederivatstruktureinheiten (B) vom Typ B-I (umfassend (I-1), (I-2), (I-3), (I-4), (I-5), (I-6)) bestimmt. Dies steht wahrscheinlich u. a. damit im Zusammenhang, dass diese zweifach substituierten Spezies vom Typen B-I gegenüber den jeweils nur einfach substituierten Spezies vom Typen B-II und B-III, eine höheren Anteil an Seitenketten bzw. Haftgruppen im Copolymer bewirken.

Der Anteil an Haftgruppen (bereitgestellt durch die Substituenten E¹, E², Q¹ sowie Q²) hat maßgeblichen Einfluss auf die Bindemittelverträglichkeit sowie die Wechselwirkung mit relevanten Feststoffoberflächen.

Als Haftgruppen zeigen quartäre Ammoniumsalzstrukturen gegenüber tertiären Aminstrukturen häufig andere Eigenschaften, wodurch in der Regel die Universalität des Netz und Dispergiermittels verbessert wird.

Quartäre Ammoniumsalzstrukturen zeigen z.B. meist eine bessere Wechselwirkung mit organischen Pigmenten, welche an der Oberfläche neutralisierte Säurefunktionen tragen. Häufig erweist sich auch eine Mischung aus Ammoniumsalzstrukturen und tertiären Aminstrukturen als vorteilhaft, und zwar auch dann, wenn nur ein verhältnismäßig geringer Anteil an Ammoniumsalzstrukturen vorliegt.

Durch die Basisstruktureinheit (A) werden die langen Seitenketten (insbesondere der Struktureinheit (B)) "auf Abstand gehalten" (je nach Pfropfungsdichte/Pfropfungsumsatz) sowie außerdem je nach Auswahl des die Basisstruktureinheit (A) erzeugenden Monomers (a), die Polarität bzw. Affinität des erfindungsgemäßen Copolymers gezielt beeinflusst.

Grundsätzlich kann durch geeignete Auswahl der bivalenten Struktureinheiten (A) und (B) die jeweils gewünschte Eigenschaft als Netz- und Dispergiermittel bereitgestellt werden. Wenn auch nicht bevorzugt, so ist es jedoch auch nicht ausgeschlossen, dass das erfindungsgemäße Copolymer neben den Struktureinheiten (A) und (B) noch weitere bivalente Struktureinheiten aufweist.

In einer bevorzugten Ausführungsform der Erfindung enthält das erfindungsgemäße Copolymer
i) 48 - 70, bevorzugt 50 - 67 Mol-% der Basisstruktureinheit (A) sowie
ii) 30 - 52, bevorzugt 33 - 50 Mol-% der substituierten Dicarbonsäurederivatstruktureinheit (B).

Entsprechende Anteile der Struktureinheiten (A) und (B) im erfindungsgemäßen Copolymer gewährleisten, dass praktisch eine optimale Dichte an Haftgruppen (E¹, E², Q¹ sowie Q²) realisiert werden kann.

Bevorzugt enthält das erfindungsgemäße Copolymer 12 - 500, bevorzugt 20 - 200 Struktureinheiten, welche aus der Basisstruktureinheit (A) und der Dicarbonsäurederivatstruktureinheit (B) ausgewählt sind.

Typischerweise ist im erfindungsgemäßen Copolymer verwirklicht, dass
der molare Anteil der Struktureinheiten, welche der Gruppe bestehend aus (I-1), (I-2), (I-3), (I-4), (I-5) sowie (I-6) zugehören bezogen auf die Gesamtheit der Struktureinheiten, die der Dicarbonsäurederivatstruktureinheit (B) zuzurechnen sind, 10 - 80, bevorzugt 25 - 75 % beträgt,
der molare Anteil der Struktureinheiten, welche der Gruppe bestehend aus (I-2), (I-3), (I-4), (I-5), (I-6), (II-2), (II-3), (III-2) sowie (III-3) zugehören bezogen auf die Gesamtheit der Struktureinheiten, die der Dicarbonsäurederivatstruktureinheit (B) zuzurechnen sind, 10 - 90, bevorzugt 20 - 80 % beträgt und
bezüglich der Dicarbonsäurederivatstruktureinheit (B) der molare Anteil der Substituenten, welche der Gruppe bestehend aus Q¹ sowie Q² angehören bezogen auf die Gesamtheit der Substituenten, die der Gruppe bestehend aus E¹, E², Q¹ sowie Q² angehören, 20 - 95, bevorzugt 25 - 90 % beträgt.

Meist ist das die Basisstruktureinheit (A) erzeugende, eine olefinische Doppelbindung enthaltende Monomer (a) ausgewählt aus einem oder mehreren der Monomere der Gruppe bestehend aus Alkyl(meth)acrylaten sowie Alkenyl(meth)acrylaten von geradkettigen, verzweigten oder cycloaliphatischen Mono-Alkoholen mit 1 bis 22 Kohlenstoffatomen oder von geradkettigen oder verzweigten aromatischen oder gemischt aromatisch-aliphatischen Monoalkoholen mit 1 bis 22 Kohlenstoffatomen, Mono(meth)acrylaten von oligomeren oder polymeren Ethern, (Meth)acrylate von halogenierten Alkoholen; oxiranhaltige (Meth)acrylate, Styrol, substituierte Styrole, α-Olefine, Vinylether, Allylether; Methacrylnitril, Acrylnitril; Vinylgruppen aufweisende cycloaliphatische Heterocyclen mit wenigstens einem N-Atom als Ringglied, Vinylester von Monocarbonsäuren mit 1 bis 20 Kohlenstoffatomen, N-Alkyl- und N,N-Dialkylsubstituierte Acrylamide mit geradkettigen, verzweigten oder cycloaliphatischen Alkylgruppen mit 1 bis 22 Kohlenstoffatomen, ethylenisch ungesättigte Monomere mit mindestens einer carbonsauren, phosphonsauren, phosphorsauren und/oder sulfonsauren Gruppe und ungesättigten Fettsäuren.

Vorstehend im einzelnen noch nicht genannte Spezies der genannten Grundtypen des Monomers (a) können zum Beispiel eingesetzt werden:
Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Tridecyl(meth)acrylat, Cyclohexyl(meth)acrylat, Isobornyl(meth)acrylat, Allyl(meth)acrylat, t-Butyl(meth)acrylat; Aryl(meth)acrylate, substituiertes oder nicht substituiertes Benzyl(meth)acrylat, substituiertes oder nicht substituiertes und Phenyl(meth)acrylat, wie 4-Nitrophenylmethacrylat; Hydroxyalkyl(meth)acrylate von geradkettigen, verzweigten oder cycloaliphatischen Diolen mit 2 bis 36 Kohlenstoffatomen, wie 3-Hydroxypropylmethacrylat, 3,4-Dihydroxybutylmonomethacrylat, 2-Hydroxy-ethyl(meth)acrylat, 4-Hydroxybutyl(meth)acrylat, 2-Hydroxypropylmethacrylat, 2,5-Dimethyl-1,6-hexandiolmonomethacrylat, Hydroxyphenoxypropylmethacrylat, Mono(meth)acrylate von Polyethylenglykolen, Polypropylenglycolen oder gemischten Polyethylen/propylenglycolen, Poly(ethylenglycol)methylether(meth)acrylat, Poly(propylenglycol)methylether(meth)-acrylat mit 5 bis 80 Kohlenstoffatomen, Methoxyethoxyethyl(meth)acrylat, 1-Butoxypropyl(meth)acrylat, Cyclohexyloxymethyl(meth)acrylat, Methoxymethoxy-ethyl(meth)acrylat, Benzyloxymethyl(meth)acrylat, Furfuryl(meth)acrylat, 2- Butoxy-ethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, Ethoxymethyl(meth)acrylat, Caprolacton- und/oder Valerolacton-modifizierte Hydroxyalkyl(meth)acrylate mit einem Molekulargewicht von 220 bis 1200, wobei die Hydroxy(meth)acrylate bevorzugt von geradkettigen, verzweigten oder cycloaliphatischen Diolen mit 2 bis 8 Kohlenstoffatomen abgeleitet sind; Perfluoralkyl(meth)acrylate mit 6 bis 20 Kohlenstoffatomen; oxiranhaltige (Meth)acrylate, vorzugsweise 2,3-Epoxybutylmethacrylat, 3,4-Epoxybutylmethacrylat, Glycidyl(meth)acrylat; α-Methylstyrol, 4-Methylstyrol; 1-Hexen, 1-Hepten, 1-Octen, 1-Nonen, 1-Decen, 1-Undecen, 1-Dodecen; 1-[2-(Methacrylyloxy)-ethyl]-2-imidazolidin, N-Vinylpyrrolidon, N-Vinylcaprolactam, Vinylacetat; N-(t-Butyl)acrylamid, N,N-Dimethylacrylamid, (Meth)acrylsäure, Carboxyethyl(meth)acrylat, Citraconsäure, Crotonsäure, Zimtsäure, Vinylsulfonsäure, 2-Methyl-2-[(1-oxo-2-propenyl)amino]-1-propansulfonsäure, Styrolsulfonsäure, Vinylbenzolsulfonsäure, Vinylphosphonsäure sowie deren Ester, Vinylphosphorsäure sowie deren Ester, 2-(Meth)acryloyloxyethylphosphat, 3-(Meth)acryloyloxypropylphosphat, 4-(Meth)acryloyloxybutylphosphat, 4-(2-Methacryloyloxyethyl)trimellithsäure und die in der EP-A-1674067 genannten, saure Gruppen sowie eine polymerisierbare Doppelbindung aufweisenden Monomere.

Nach erfolgter Polymerisation können die betreffenden Struktureinheiten, die sich von diesen ethylenisch ungesättigten Monomeren ableiten, noch weiter modifiziert werden.

So lassen sich zum Beispiel Oxiranstrukturen mit nucleophilen Verbindungen, wie 4-Nitrobenzoesäure, umsetzen. Hydroxygruppen können mit Lactonen, wie zum Beispiel ε-Caprolacton, zu Polyestern umgesetzt werden und aus Estergruppen können durch säure- oder basenkatalysierte Esterspaltung Polymer-Struktureinheiten mit OH-Gruppen freigesetzt werden.

Bevorzugte Monomere (a) sind Styrol und Styrolderivate, Vinylether, Allylether und Vinylheterocyclen, wobei Styrol besonders bevorzugt ist.

In der Regel werden mindestens 60 Mol-%, bevorzugt mindestens 90 Mol-%, besonders bevorzugt 100 Mol-% der der Basisstruktureinheit (I) zugehörigen Struktureinheiten durch Umsetzung von Styrol erzeugt.

Die Erfindung betrifft auch die Herstellung des vorstehend beschriebenen Copolymers, welche sich dadurch auszeichnet, dass zunächst ein Copolymervorprodukt durch Polymerisation hergestellt wird, wobei durch anschließende Pfropfung die Substituenten vom Typ (I), (II) und/ oder (III) der Dicarbonsäurederivatstruktureinheit (B) ausgebildet werden.

In einer besonders bevorzugten Ausführungsform wird die anschließende Pfropfung durch den Einsatz von Reaktionswasser befreienden Maßnahmen, bevorzugt durch Erwärmung auf eine Temperatur von 120 bis 200 °C, solange durchgeführt bis der molare Anteil der Struktureinheiten, welche der Gruppe bestehend aus (I-1), (I-2), (I-3), (I-4), (I-5) sowie (I-6) zugehören, bezogen auf die Gesamtheit der Struktureinheiten, die der Dicarbonsäurederivatstruktureinheit (B) zuzurechnen sind, mindestens 5 %, bevorzugt mindestens 10 %, besonders bevorzugt mindestens 25 %, beträgt.

Anschließend erfolgt dann typischerweise die Quarternisierung bzw. die Teilquarternisierung der relevanten tertiären Aminogruppen.

Die Herstellung des erfindungsgemäßen Copolymers erfolgt somit praktisch durch Umsetzung von die Monomerstruktureinheiten (A) und (B*) enthaltenden Copolymervorprodukten (nachstehend Hauptkettenpolymere genannt) mit primären Monoaminen und/ oder Monoalkoholen, die jeweils mindestens eine tertiäre Aminogruppe enthalten. Diese tertiären Aminogruppen werden teilweise oder vollständig zum quartären Ammoniumsalz umgewandelt. Die Umwandlung der Struktureinheiten des "(B*)-Typs" in den "(B)-Typen" erfolgt durch Veresterungs-, Amidierungs-, Imidierungs- und Quaternisierungsreaktionen.

Das zahlengemittelte Molekulargewicht (Bestimmungsmethode Gelpermeationschromatographie) der Hauptkettenpolymere liegt häufig zwischen 1200 g/mol und 12000 g/mol.

Die Hauptkettenpolymere können einen statistischen, alternierenden, gradientenartigen oder blockartigen Aufbau besitzen.

Vorzugsweise sind die zur Herstellung der erfindungsgemäßgen Copolymere einsetzbaren linearen oder verzweigten Maleinsäureanhydrid basierten Hauptkettenpolymere (Vorprodukte) herstellbar durch radikalisch initiierte Polymerisation, zum Beispiel mit Azo- oder Peroxidinitiatoren. Um das gewünschte Molekulargewicht einzustellen, können Kettenregler (Kettenüberträger) wie zum Beispiel Thiole, sekundäre Alkohole oder Alkylhalogenide wie Tetrachlorkohlenstoff während der Polymerisation zugegeben werden. Weitere mögliche Herstellverfahren betreffen kontrollierte radikalische Polymerisationsverfahren. Je nachdem, welche kontrollierte Polymerisationstechnik ggf. eingesetzt wird, werden selbst bei Einsatz identischer ethylenisch ungesättigter Monomere und selbst bei denselben molaren Verhältnissen der Monomere unterschiedliche Copolymere erhalten, da unterschiedlichen Polymerisationstechniken zu unterschiedlichen Mikrostrukturen bzw. zu unterschiedlichen Abfolgen der Struktureinheiten führen können.

Dabei sind die erhaltenen Copolymere (Vorprodukte des erfindungsgemäßen Copolymers) nicht zwangsläufig über den Polymerisationsregler als Endgruppe definiert. Die Endgruppe kann beispielsweise nach der Polymerisation ganz oder teilweise abgespalten werden. So ist es zum Beispiel möglich, die Nitroxylendgruppe der Copolymeren, welche mittels NMP hergestellt wurden, thermisch abzuspalten. Weitere Herstellverfahren für die zur Herstellung der Hauptkettenpolymere können kontrollierte radikalische Polymerisationsverfahren sein. Je nachdem, welche kontrollierte Polymerisationstechnik eingesetzt wird, werden selbst bei Einsatz identischer ethylenisch ungesättigter Monomere und selbst bei denselben molaren Verhältnissen der Monomere unterschiedliche Copolymere erhalten, da die unterschiedlichen Polymerisationstechniken zu unterschiedlichen Mikrostrukturen beziehungsweise zu unterschiedlichen Abfolgen der Struktureinheiten führen können. So werden beispielsweise bei der Herstellung von Blockcopolymeren nach unterschiedlichen Techniken bei Einsatz identischer Monomerenmischungen unterschiedlich mikrostrukturierte Blöcke erhalten. Darüber hinaus können sich die Copolymeren auch noch hinsichtlich ihres Molekulargewichts und ihrer Molekulargewichtsverteilung deutlich unterscheiden. Gleiches gilt auch für gradientenartige Copolymere.

Weiterhin können diese Hauptkettenpolymere in Mischung mit AB-Blockcopolymeren, die einen Block aus dem Hauptkettenpolymer besitzen, eingesetzt werden. Hierbei ist der zweite Block aus Styrol, Aryl- und Alkylsubstituierten Acrylaten und Methacrylaten aufgebaut.

In der Regel liegen R¹ und R² jeweils unabhängig voneinander als Polyetherrest, als Polyesterrest, als Polyetherpolyesterrest, als Poly-2-alkyl-2-oxazolinrest, als Poly-2-alkyl-2-oxazinrest und/oder als Polysiloxanrest vor.

Typischerweise bilden R¹¹ und R¹² zusammen mit dem R¹¹ und R¹² verbindenden N-Atom gemeinsam einen aromatischen, substituierten oder nicht substituierten Heterozyklus aus, der insgesamt zwei N-Atome aufweist.

Meist liegt M- als Carboxylat, als Phosphat, als Phosphatmonoester, als Phosphatdiester, als Alkylsulfonat, als Sulfat und/ oder als Halogenid vor.

Die Haftgruppen werden durch Umsetzung der Struktureinheit (B*) des Hauptkettenpolymers mit primären Aminen und/ oder Alkoholen (HX¹-E¹, HX²-E¹, HX¹-E² oder/und HX²-E²) und anschließender Quarternisierung bzw. Teilquarternisierung erzeugt.

Konkret kann die Struktureinheit (B*) mit folgenden Spezies umgesetzt werden:
- N,N-disubstituierte Diamine der allgemeinen Struktur R¹¹R¹²N-Y-NH₂ Beispiele hierfür sind N,N-Dimethylaminoethylamin, N,N-Dimethylaminopropylamin, N,N-Diethylaminoethylamin und N,N-Diethylaminopropylamin.
- N,N-disubstituierte Aminoalkohole der allgemeinen Struktur R¹¹R¹²N-R³-OH. Beispiele sind Dimethylaminoethanol und Diethylaminoethanol.
- basische Heterocylen, die eine primäre Amin- oder Alkoholfunktion tragen Entsprechende Beispiele sind 2-Aminomethylpyridin, 4-Aminomethylpyridin, N-Aminopropyl-imidazol, 8-Hydroxychinolin, 4-(2-Hydroxyethyl)morpholin, 1-(2-Hydroxyethyl)-pyrrolidin

Bevorzugt sind N,N-disubstituierte Diamine der allgemeinen Struktur R¹¹R¹²N-Y-NH₂.

Um die Q¹ und/ oder Q² enthaltenden quaternären Ammoniumsalzstrukturen herzustellen, kann die tertiäre Aminofunktion der oben beschriebenen Verbindungen mit Alkylierungsmittel umgesetzt werden. Geeignete Alkylierungsmittel sind Alkyl- und Aralkylhalogenide -sulfate, wie Benzylchlorid, Methyliodid oder Dimethylsulfat. Es sind auch Kombinationen von Oxiranen und Säuren als Alkylierungsmittel geeignet. Beispiele für Oxirane sind in diesem Zusammenhang Ethylenoxid, Propylenoxid, Butylenoxid, Styroloxid und Glycidether, wie Ethylhexylglycidether, Phenylglycidether und Kresylglycidether.

Als Reaktionskomponente für die besagte Struktureinheit (B*) eignen sich auch Oligomere und Polymere, die eine monofunktionelle Amino- und/ oder Hydroxylfunktion tragen (HX¹-R¹, HX²-R¹, HX¹-R² oder/und HX²-R²).

Beispiele hierfür sind:
- Polyalkylenoxidmonoamine, die C₁ - C₄-alkoholgestartete Polyether sind, die aus Ethylenoxid- und/oder Propylenoxid aufgebaut sind und eine primäre Aminogruppe tragen: Das Gewichtsverhältnis von Ethylenoxid- zu Propylenoxid-Einheiten liegt häufig zwischen 5:95 und 100:1, bevorzugt zwischen 30:70 und 70:30. Das zahlengemittelte Molekulargewicht der Polyalkylenoxidmonoamine liegt typischerweise zwischen 500 g/mol und 3000 g/mol.
- Monohydroxyterminierte Polyether: Diese können zum Beispiel durch Alkoxylierung von monofunktionellen Alkoholen, wie Alkanolen, Cycloalkanolen, Phenolen mit Alkylenoxiden wie Ethylenoxid, Propylenoxid, Butylenoxid, Styroloxid, aliphatischen oder aromatischen Glycidethern wie Isopropylglycidether, Butylglycidether, Allyglycideter, 2-Ethylhexylglycidether, Kresylglycidether und Phenylglycidether hergestellt werden. Es können auch Mischungen dieser Rohstoffe eingesetzt werden. Im Falle von gemischten Polyethern können diese statistisch, in Gradientenform oder in Blöcken angeordnet sein. Diese Polyether haben häufig ein zahlenmittleres Molekulargewicht (Mₙ) im Bereich von etwa 100 bis 25000, besonders häufig von 150 bis 15000 und besonders typisch von 200 bis 10000 g/mol. Bevorzugt sind Polyether auf Basis von Ethylenoxid, Propylenoxid und deren Mischungen.
- Monohydroxyterminierte Polyester und Polyether-Polyesterblockcopolymere: Diese werden erhalten durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Monohydroxy-Startkomponente (wie in US-A-4 647 647 beschrieben). Bevorzugt besitzen diese ein zahlenmittleres Molekulargewicht von 150 bis 5000 g/mol. Die Lactonpolymerisation wird nach bekannten Verfahren, initiert durch beispielsweise Titanate, p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.
- Monohydroxy- oder monoaminoterminierte Poly-2-alkyl-2-oxazoline oder Poly-2-alkyl-2-oxazine: Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. Die Synthese von aminoterminierten Polyoxazolinen ist beispielsweise in US 6, 444, 776 beschrieben. Durch Wahl des Alkylsubstituenten lässt sich die Verträglichkeit steuern. So ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht Mₙ von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.
- Monohydroxy- oder monoaminoterminierte Polysiloxane:
   Die Polysiloxane lassen sich mit der nachstehenden allgemeinen Formel beschreiben: 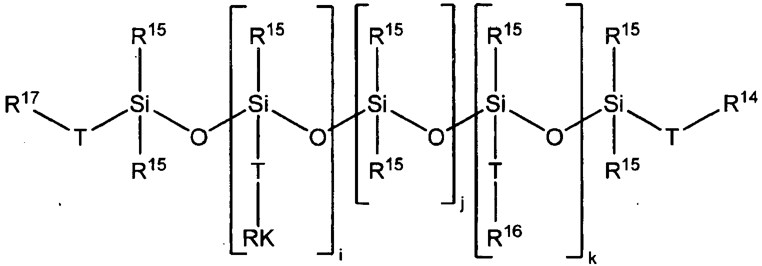 mit
      T = C₁-C₁₄-Alkylen,
      RK = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem Molekulargewicht zwischen 200 und 4000 g/mol,
      R¹⁴ und R¹⁷ jeweils unabhängig repräsentiert durch
      C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK,
      R¹⁵ = C₁-C₁₄-Alkyl, -Aryl oder -Aralkyl,
      R¹⁶ = polyhydroxyfunktioneller verzweigter Polyglycidol-Polyetherrest, der aus einer verzweigten Polyglycidolgruppe besteht oder diese enthält,
      i = 0 - 20, bevorzugt 1 - 15, besonders bevorzugt 1 - 8,
      j = 2 - 300, bevorzugt 10 - 200, besonders bevorzugt 15 - 100 und
      k = 0 - 20, bevorzugt 1 - 15, besonders bevorzugt 1 - 8,
      wobei bei C = 0 gilt, dass R¹⁴ = R¹⁶ und/oder R¹⁷ = R¹⁶. Wenn die Einheit - [SiR¹⁵(Z-R¹⁶)]-O- vorhanden ist, d. h. C mindestens 1 ist, so ist es möglich, dass R¹⁴ und R¹⁷ verschieden von R¹⁶ sind.

Die Herstellung des erfindungsgemäßen Copolymers erfolgt typischerweise auf eine Weise, dass im ersten Schritt das Hauptkettenpolymer, welches ggf. in einem Lösemittel angelöst ist, so umgesetzt wird (bei Temperaturen von vorzugsweise 120°C bis 200°C mit tertiären Aminogruppen tragenden primären Aminen und/ oder Alkoholen), dass Anhydridstrukturen zu Bernsteinsäurediamiden, Bernsteinsäurediestern oder Bernsteinsäureesteramiden umgesetzt werden.

Bei der Amidierungs- und Veresterungsreaktion zum Bernsteinsäurediamid, Bernsteinsäurediester oder Bernsteinsäureesteramid entsteht jeweils Reaktionswasser. Durch Entfernung des Reaktionswassers kann der Anteil an Bernsteinsäurediamid, Bernsteinsäurediester oder Bernsteinsäureesteramid erhöht werden. Als weitere Strukturen entstehen bei höheren Temperaturen (insbesondere bei über 120°C) zusätzlich Bernsteinsäureimidstrukturen. Weiterhin ist der Anteil an Bernsteinsäurediamide, Bernsteinsäurediester oder Bernsteinsäureesteramide von der eingesetzten Menge an sterisch abschirmend wirkenden polymeren Monoaminen und -alkoholen anhängig. Je mehr polymere Monoamine und -alkohole eingesetzt werden, desto geringer wird der Anteil an gebildeten Bernsteinsäurediamid-, Bernsteinsäurediester- oder Bernsteinsäureesteramidstrukturen. Meist beträgt der molare Anteil an polymeren hydroxy- und aminofunktionellen Seitenkettenmolekülen bezogen auf die Gesamtzahl an Aminen und Alkoholen, die mit (B*) die Struktureinheit (B) bilden, maximal 50 Mol-%.

Ein typisches erfindungsgemäßes Vorgehensprinzip soll nachstehend erläutert werden:
1 mol Säureanhydridstruktur IV-1 reagiert mit 1 mol der Reaktandentypen HX-R, HX-Q und/oder HX-E schon bei Raumtemperatur zu Struktur II. Durch Erhöhung der Temperatur auf über 120 °C (insbesondere über 150°C) bildet sich die Struktur III aus II. Wird über erste Mol hinaus ein Überschuß an Reaktanden HX-R, HX-Q und/oder HX-E zu der Säureanhydridstruktur IV-1 oder den Strukturen II und III gegeben, so bildet sich bei Temperaturen über 100°C (bevorzugt über 120°C) die Strukturen I-1 bis I-6 aus. Durch Zugabe von geeigneten Katalysatoren kann die Reaktion beschleunigt werden und/oder die Reaktionstemperatur niedriger gewählt werden. Die Entfernung des Reaktionswasser, das bei der Bildung der Strukturen I und III entsteht, z.B. durch Anlegen von Vakuum, erhöht den Anteil an gebildeten Strukturen I und III oder verkürzt die Reaktionszeiten. Durch Abdestillieren von flüchtigen HX-R, HX-Q und/oder HX-E kann die Struktur I (langsam) in den Strukturtypen III überführt werden, da beide Strukturen im chemischen Gleichgewicht stehen. Weiterhin ist der Anteil an Struktur I von der eingesetzten Menge an sterisch abschirmend wirkenden polymeren Monoaminen und -alkoholen R-XH anhängig. Je mehr R-XH eingesetzt werden, desto geringer wird der Anteil an gebildeten Bernsteinsäurediamid-, Bernsteinsäurediester- oder Bernsteinsäureesteramidstrukturen I, da sich aus sterischen Gründen das Strukturelement I-1 langsamer bildet als die Strukturen I-4 und I-5. Meist beträgt der molare Anteil an polymeren hydroxy- und aminofunktionellen Seitenkettenmolekülen bezogen auf die Gesamtzahl an Aminen und Alkoholen, die mit (B*) die Struktureinheit (B) bilden, maximal 50 Mol-%.

Bei der Umsetzung kann das zugegebene Lösemittel wieder abdestilliert werden, um zum Beispiel das durch die Amidierungs- und Veresterungsreaktion anfallende Wasser durch azeotrope Destillation zu entfernen. Durch Bestimmung der Säurezahl, ggf. der Pyridinsäurezahl und der Aminzahl respektive der OH-Zahl kann der Anteil an Bernsteinsäurediamiden, Bernsteinsäurediestern und Bernsteinsäureesteramiden bestimmt werden.

Die Strukturtypen I - III stehen bei Reaktionstemperatur in einem Gleichgewichtszustand. So kann durch Zugabe der Reaktandentypen HX-R, HX-Q und/oder HX-E der Strukturtyp II und III in den Strukturtypen I überführt werden. Es ist aber auch möglich, durch Abdestillieren von flüchtigen HX-R, HX-Q und/oder HX-E den Strukturtypen I (langsam) in den Strukturtypen III zu überführen.

Die Erfindung betrifft auch eine Dispersion, welche ein Dispergiermedium sowie dispergierten partikulären Feststoff enthält, der bevorzugt in Form eines anorganischen Füllstoffs, und/oder in Form eines anorganischen oder organischen Pigments und/oder in Form von Kohlenstoff-Nanoröhren und/oder in Form von Graphenen, vorliegt, wobei bezogen auf das Gesamtgewicht der Dispersion 0,1-10 Gew.-%, bevorzugt 0,3 bis 4,5 Gew.-%, des erfindungsgemäßen Copolymers als Netz- und Dispergiermittel eingesetzt wird.

Bevorzugt liegt die erfindungsgemäße Dispersion als Tinte oder Beschichtungsmittel, insbesondere als Lack, vor.

Die Erfindung betrifft weiterhin auch eine Partikelzubereitung enthaltend 30,0 bis 99,9 Gew.% partikulären Feststoff sowie 0,1 - 70,0 Gew.% des erfindungsgemäßen Copolymers.

Schließlich betrifft die Erfindung die Verwendung des erfindungsgemäßen Copolymers als Netz- und Dispergiermittel.

Das erfindungsgemäße Copolymer (Kammcopolymere) wird insbesondere in bekannten Einsatzgebieten von Dispergiermitteln verwendet, z. B. bei der Herstellung oder Verarbeitung von Lacken, von Druckfarben, von Papierstrich, von Leder- und Textilfarben, von Pasten, von Pigmentkonzentraten, von Keramiken oder von kosmetischen Zubereitungen und zwar insbesondere dann, wenn diese Produkte Feststoffe, wie Pigmente und/oder Füllstoffe, enthalten.

Auch bei der Herstellung oder Verarbeitung von Gieß- und/oder Formmassen auf Basis von synthetischen, halbsynthetischen oder natürlichen makromolekularen Stoffen, wie Polyvinylchlorid, gesättigten oder ungesättigten Polyestern, Polyurethanen, Polystyrol, Polyacrylat, Polyamid, Epoxidharzen, Polyolefinen, wie Polyethylen oder Polypropylen, kann das erfindungsgemäße Copolymer eingesetzt werden. Beispielsweise lassen sich entsprechende Copolymere verwenden zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken. Beispiele für übliche Bindemittel sind Harze auf Basis von Polyurethan, Cellulosenitrat, Celluloseacetobutyrat, Alkyd, Melamin, Polyester, Chlorkautschuk, Epoxid und Acrylat. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die Kammcopolymere (erfindungsgemäßes Copolymer) eignen sich insbesondere auch als Dispergiermittel zur Herstellung von Feststoffkonzentraten, wie Pigmentkonzentraten. Dazu werden beispielsweise die Kammcopolymere in einem Trägermedium, wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den Kammcopolymeren ist es aber insbesondere möglich, stabile bindemittelfreie Pigmentkonzentrate herzustellen. Ebenso ist es möglich, mit den Polymeren fließfähige Feststoffkonzentrate aus Pigmentpresskuchen herzustellen. Hierbei werden dem Presskuchen, der noch organische Lösemittel, Weichmacher und/oder Wasser enthalten kann, die Kammcopolymere zugemischt und die so erhaltene Mischung dispergiert. Die auf verschiedenen Wegen hergestellten Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch lösemittelfrei direkt in den Kammcopolymeren dispergiert werden und eignen sich dann besonders zur Pigmentierung von thermoplastischen und duroplastischen Kunststoffformulierungen.

Die Kammcopolymere können vorteilhaft auch bei der Herstellung von Tinten für "non impact"-Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder - arme Tinten für UV-Applikationen als auch wachsartige Tinten sein.

Die Kammcopolymere können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Compounds) verwendet werden. Hierbei kann der flüssige Farbfilterlack, der auch Color Resist genannt wird, durch verschiedenste Applikationsverfahren wie Spin Coating, Aufrakeln, Kombination beider oder über "non impact"-Druckverfahren wie zum Beispiel Inkjet-Verfahren aufgetragen werden. Die MLCC-Technologie wird bei der Herstellung von Mikrochips und Leiterplatten verwendet.

Die Kammcopolymere können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen, Lösungen, Gele, Cremes, Lotionen oder Sprays, vorliegen. Die Kammcopolymere können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, z.B. organische und anorganische Pigmente, wie Titandioxid oder Eisenoxid, enthalten.

Ein derartiges Dispergiermittel kann schließlich auch zur Herstellung eines pigmentierten Überzuges auf einem Substrat verwendet werden, wobei der Pigmentlack auf das Substrat aufgebracht wird und wobei der auf das Substrat aufgebrachte Pigmentlack eingebrannt oder ausgehärtet bzw. vernetzt wird.

Die Kammcopolymere können alleine oder zusammen mit üblichen Bindemitteln eingesetzt werden. Beim Einsatz in Polyolefinen kann es z. B. vorteilhaft sein, entsprechende niedermolekulare Polyolefine als Trägermaterialien zusammen mit dem erfindungsgemäßen Copolymer einzusetzen.

Eine mögliche Verwendung der Kammcopolymere besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit dem Kammcopolymer beschichtet sind. Derartige Beschichtungen von organischen wie auch anorganischen Feststoffen werden in bekannter Weise ausgeführt. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der Copolymere zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein. Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sog. Hybrid-Partikel handeln, die aus einem anorganischen Kern und einer organischen Hülle - oder umgekehrt - bestehen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas, Polyvinylendifluorid (PVDF) oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls gut dispergieren und stabilisieren.

Im Übrigen kann das erfindungsgemäße Copolymer auch als Emulgator und Phasenvermittler (Verträglichkeitsvermittler flüssig/flüssig) eingesetzt werden.

Nachstehend soll die Erfindung anhand von Ausführungsbeispielen näher erläutert werden.

### Ausgangsstoffe:

| | |
|---|---|
| Kunstharz SMA 2000 | SMA-Copolymer mit einem Styrolanteil von 66 mol-%, Pyridinsäurezahl = 335; Hersteller Cray Valley |
| Jeffamine M 2070 | Polyethermonoamin mit endständiger primärer Aminogruppe, molares Verhältnis von Ethylenoxid- zu Propylenoxid-Wiederholungseinheiten ca. 31/10, Aminzahl = 27; Hersteller Huntsman |
| Jeffamine M 2005 | Polyethermonoamin mit endständiger primärer Aminogruppe, molares Verhältnis von Ethylenoxid- zu Propylenoxid-Wiederholungseinheiten ca. 6/29, Aminzahl = 25; Hersteller Huntsman |
| MPEG 750 | Polyethylenglycolmonomethylether, Molgewicht ca. 750, OHZ = 75; Hersteller BASF |
| Polyester PE | Caprolactonpolyester aus WO 2009/103381, Zwischenprodukt A1, OHZ = 51 |
| Polysiloxan S | α-Butyldimethylsiloxy-ω-(3-(2-hydroxyethoxy)propyl))-polydimethylsiloxan, Mₙ = 4670 g/mol, OHZ = 12; von Sigma-Aldrich |
| Grilonit RV1814 | Alkylglycidylether, Hersteller EMS Chemie |
| Uniox Mus 15 | α-Methyl-ω-(2-propenyloxy)poly(oxy-1,2-ethanediyl), Hersteller NOF |

### Meßverfahren:

### Gelpermeationschromatographie (GPC)

Die Gelpermeationschromatographie wurde bei 40°C mit einer Hochdruckflüssigkeitschromatographie-Pumpe (Bischoff HPLC 2200) und einem Brechungsindexdetektor (Waters 419) durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht Mn, das gewichtsmittlere Molekulargewicht Mw und der Polymolekularitätsindex PMI = Mw/Mn wurden mit dem Programm NTeqGPC berechnet.

### Festkörper

Ca. 2 g Probe werden in eine vorher getrocknete Aluminiumschale eingewogen und 30 Minuten bei 150°C im Trockenschrank getrocknet, im Exsikkator abgekühlt, und dann zurückgewogen. Der Rückstand entspricht dem Festkörperanteil.

### Hydroxyzahl

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktiriert. Die OH-Zahl gibt die Menge KOH in mg an, die der bei der Acetylierung von 1g Substanz gebundenen Menge Essigsäure äquivalent ist.

### Aminzahl

Unter der Aminzahl (AZ) wird die Menge KOH in mg verstanden, die dem Aminanteil von 1g Substanz entspricht. Die Aminzahl wird nach DIN 16945 durch eine Neutralisationsreaktion mit 0,1 n Perchlorsäure in Essigsäure als Titationsmittel bestimmt:

R - NH₂ + HClO₄ → R - NH₃⁺ + ClO₄⁻

Die Zugaben inerter Lösemittel, wie Cyclohexan, Dioxan, Chlorbenzol, Aceton, Methylethylketon können die Titration sehr schwacher Basen verbessern.

### Säurezahl

Unter der Säurezahl (SZ) wird die Menge KOH in mg verstanden, die zur Neutralisation von 1g Substanz unter den festgelegten Bedingungen erforderlich ist. Die Säurezahl wird nach DIN EN ISO 2114 durch eine Neutralisationsreaktion mit 0,1 n KOH in Ethanol als Titationsmittel bestimmt:

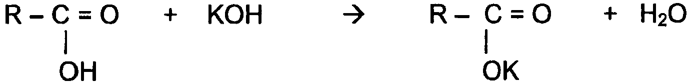

### Gesamtsäurezahl

Unter der Gesamtsäurezahl (GSZ) wird die Menge KOH in mg verstanden, die zur Neutralisation von 1g Substanz unter den festgelegten Bedingungen erforderlich ist. Hierbei werden sowohl die Säure- als auch die Säureanhydridgruppen erfasst.

Die Gesamtsäurezahl wird nach DIN EN ISO 2114 durch eine Neutralisationsreaktion mit 0,1 n KOH in Ethanol als Titationsmittel bestimmt:

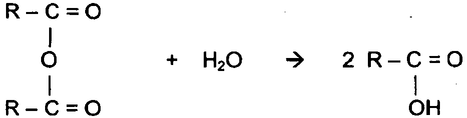

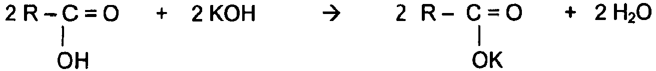

### Unterschiedliche Haupketten

### Polymer 1: 0 mol-% Bernsteinsäurediamidstruktur (0 mol-% Struktureinheit I), 90 % Quat (d.h. 90 mol-% der tertiären Aminogruppen quarternisiert) (Vergleichsbeispiel zu Polymer 3-6)

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 94,3 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.
Das Reaktionsprodukt wird 50%ig in Butylglycol angelöst.

| | |
|---|---|
| AZ(_{theo.}) = 17 | AZ(_{gemessen}) =17 |
| | SZ(_{gemessen}) = 4 |

100 g der Polymerlösung wird bei 120°C mit 3,5 g Benzylchlorid 4 h zur Reaktion gebracht und mit Butylglycol auf einen Festkörper (Festkörperanteil) von 50% eingestellt.

### Polymer 2: 100 mol-% Bernsteinsäurediamidstruktur (Struktureinheit I), Amin; 0 % Quat (d.h. 0 mol-% der tertiären Aminogruppen quarternisiert) (Vergleichsbeispiel zu Polymer 3-6)

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.
Das Reaktionsprodukt wird 50%ig in Butylglycol angelöst.

| | |
|---|---|
| AZ(_{theo.}) = 40 | AZ(_{gemessen}) = 40 |

| | |
|---|---|
| | SZ(_{gemessen}) = 1 |

### Polymer 3: 100 mol-% Bernsteinsäurediamidstruktur (Struktureinheit I), 90 % Quat;

100 g der Polymerlösung Polymer 2 wird bei 120°C mit 8 g Benzylchlorid 4 h zur Reaktion gebracht und mit Butylglycol auf einen Festkörper von 50% eingestellt.

### Polymer 4: 100 mol-% Bernsteinsäurediamidstruktur, 45 % Quat;

100 g der Polymerlösung Polymer 2 wird bei 120°C mit 4 g Benzylchlorid 4 h zur Reaktion gebracht und mit Butylglycol auf einen Festkörper von 50% eingestellt.

### Polymer 5: 100 mol-% Bernsteinsäurediamidstruktur, 23 % Quat;

100 g der Polymerlösung Polymer 2 wird bei 120°C mit 2 g Benzylchlorid 4 h zur Reaktion gebracht und mit Butylglycol auf einen Festkörper von 50% eingestellt.

### Polymer 6: 100 mol-% Bernsteinsäurediamidstruktur, 11 % Quat;

100 g der Polymerlösung Polymer 2 wird bei 120°C mit 1 g Benzylchlorid 4 h zur Reaktion gebracht und mit Butylglycol auf einen Festkörper von 50% eingestellt.

### Polymer 7: 0 mol-% Bernsteinsäurediamidstruktur, 35 % Quat (Vergleichsbeispiel zu Polymer 8-11)

47,5 g Kunstharz SMA 2000 (GSZ=335/141,5 mmol Anhydridgruppen) werden in 50 g Methoxypropylacetat angelöst und langsam mit 70,8 mmol Jeffamin M 2070 (AZ=27,0) bei 110°C vermischt. Nach 30min werden 70,8 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 20 | AZ(_{gemessen}) = 20 |
| | SZ(_{gemessen}) = 7 |

80 g des Polymers wird bei 120°C mit 25,1 mmol Benzoesäure und 25,1 mmol Grilonit RV1814 (EG=283 g/mol) 4 h zur Reaktion gebracht.

### Polymer 8: 5 mol-% Bernsteinsäurediamidstruktur; 35 % Quat;

47,5 g Kunstharz SMA 2000 (GSZ=335/141,5 mmol Anhydridgruppen) werden in 50 g Methoxypropylacetat angelöst und langsam mit 70,8 mmol Jeffamin M 2070 (AZ=27,0) bei 110°C vermischt. Nach 30min werden 77,8 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 22 | AZ(_{gemessen}) = 22 |
| | SZ(_{gemessen}) = 7 |

80 g des Polymers wird bei 120°C mit 27,7 mmol Benzoesäure und 27,7 mmol Grilonit RV1814 (EG=283 g/mol) 4 h zur Reaktion gebracht.

### Polymer 9: 10 mol-% Bernsteinsäurediamidstruktur, 35 % Quat;

47,5 g Kunstharz SMA 2000 (GSZ=335/141,5 mmol Anhydridgruppen) werden in 50 g Methoxypropylacetat angelöst und langsam mit 70,8 mmol Jeffamin M 2070 (AZ=27,0) bei 110°C vermischt. Nach 30min werden 84,9 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 24 | AZ(_{gemessen}) = 24 |
| | SZ(_{gemessen}) = 19,7 |

80 g des Polymers wird bei 120°C mit 30,1 mmol Benzoesäure und 30,1 mmol Grilonit RV1814 (EG = 283 g/mol) 4 h zur Reaktion gebracht.

### Polymer 10: 15 mol-% Bernsteinsäurediamidstruktur; 35 % Quat;

47,5 g Kunstharz SMA 2000 (GSZ=335/141,5 mmol Anhydridgruppen) werden in 50 g Methoxypropylacetat angelöst und langsam mit 70,8 mmol Jeffamin M 2070 (AZ=27,0) bei 110°C vermischt. Nach 30min werden 92,0 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 26 | AZ(_{gemessen}) = 26 |
| | SZ(_{gemessen}) = 6 |

80 g des Polymers wird bei 120°C mit 32,6 mmol Benzoesäure und 32,6 mmol Grilonit RV1814 (EG = 283 g/mol) 4 h zur Reaktion gebracht.

### Polymer 11: 100 mol-% Bernsteinsäurediamidstruktur, 76 % Quat;

47,5 g Kunstharz SMA 2000 (GSZ=335/141,5 mmol Anhydridgruppen) werden in 50 g Methoxypropylacetat angelöst und langsam mit 70,8 mmol Jeffamin M 2070 (AZ=27,0) bei 110°C vermischt. Nach 30min werden 92,0 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 55 | AZ(_{gemessen}) = 57 |
| | SZ(_{gemessen}) = 1 |

80 g des Polymers wird bei 120°C mit 70,6 mmol Benzoesäure und 70,6 mmol Grilonit RV1814 (EG = 283 g/mol) 4 h zur Reaktion gebracht.

### Polymer 12: 100 mol-% Bernsteinsäurediamidstruktur; 43 % Quat;

47,5 g Kunstharz SMA 2000 (GSZ=335/141,5 mmol Anhydridgruppen) werden in 50 g Methoxypropylacetat angelöst und langsam mit 46,7 mmol Jeffamin M 2070 (AZ=27,0) bei 110°C vermischt. Nach 30min werden 236 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

| | |
|---|---|
| AZ(_{theo.}) = 79 | AZ(_{gemessen}) = 79 |
| | SZ(_{gemessen}) = 1 |

80 g des Polymers wird bei 120°C mit 101,4 mmol Benzoesäure und 101,4 mmol Grilonit RV1814 (EG = 283 g/mol) 4 h zur Reaktion gebracht.

### Polymer 13: Blockcopolymer mit pMMA-b-pSMA, 100 mol-% Struktureinheit I, 40 % Quat;

### Stufe a:

In einem Rundkolben mit Rückflusskühler, Temperaturfühler und KPG-Rührer werden unter Stickstoffatmosphäre 59,1 g 2,4-Diphenyl-4-methyl-1-penten und 132,3 g 1-Methoxy-2-propylacetat vorgelegt und unter Rühren auf 130°C erhitzt. Anschließend wird innerhalb von 90 Minuten 250,3 g Methylmethacrylat mit 3,3 g 2,2'-Azodi(2-methylbutyronitril) zudosiert. Es wird 3 h weitergerührt (Produkt: Mₙ=630, M_{w}=2900).

### Stufe b:

In einem Rundkolben mit Rückflusskühler, Temperaturfühler und KPG-Rührer werden unter Stickstoffatmosphäre 100,00 g vom Produkt aus Stufe a) vorgelegt und unter Rühren auf 130°C erhitzt. Anschließend werden innerhalb von 60 Minuten parallel 1.) 27,6 g MSA mit 1,5 g 2,2'-Azodi(2-methylbutyronitril) in 55,5 g 1-Methoxy-2-propylacetat sowie 2.) 29,4 g Styrol zudosiert. Es wird 5 h weitergerührt (Festkörper: 60% Produkt: Mₙ=1900, M_{w}=5400).

### Stufe c:

50 g Stufe b (64 mmol Anhydridgruppen) werden langsam mit 40 mmol Jeffamin M 2070 (AZ=27,0) bei 110°C vermischt. Nach 30min werden 88 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 20 | AZ(_{gemessen}) = 21 |
| | SZ(_{gemessen}) = 2 |

100 g der Polymerlösung wird bei 120°C mit 2 g Benzylchlorid 4 h zur Reaktion gebracht und mit Butylglycol auf einen Festkörper von 50% eingestellt.

### Polymer 14: Copolymer aus MSA und Dodecen, 50 mol-% Struktureinheit I; 57 % Quat

### Stufe a:

In einem Rundkolben mit Rückflusskühler, Temperaturfühler und KPG-Rührer werden unter Stickstoffatmosphäre 84,2 g 1-Dodecen und 25,5 g Xylol eingefüllt und unter Rühren auf 140°C erhitzt. Anschließend werden portionsweise 7 Mal alle 30 Minuten 7,00 g MSA sowie je 1 g Di-tert-butylperoxid parallel zugegeben. Man rührt noch 3 h bei 140°C. Da das entstandene Produkt fest wird, werden 82, 00 g Xylol nachträglich hinzugegeben. Man erhält eine klare, gelbe, mittelviskose Flüssigkeit (57%-ige Lösung; Mₙ=2500, M_{w}=7100).

### Stufe b:

100 g Stufe b (200 mmol Anhydridgruppen) werden langsam mit 200 mmol Jeffamin M 2070 (AZ=27,0) bei 110°C vermischt. Nach 30min werden 100 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Xylol und Reaktionswasser abdestilliert.

Das Reaktionsprodukt wird 50%ig in Butylglycol angelöst.

| | |
|---|---|
| AZ(_{theo.}) = 6 | AZ(_{gemessen}) = 8 |
| | SZ(_{gemessen}) = 3 |

100 g der Polymerlösung wird bei 120°C mit 1 g Benzylchlorid 4 h zur Reaktion gebracht und mit Butylglycol auf einen Festkörper von 50% eingestellt.

### Polymer 15: Copolymer aus MSA und Allylpolyether, molar 1,8:1; 35 mol-% Struktureinheit I, 20 % Quat

### Stufe a:

In einem Rundkolben mit Rückflusskühler, Temperaturfühler und KPG-Rührer werden unter Stickstoffatmosphäre 130 g Uniox Mus 15 und 60,00 g 1-Methoxy-2-propylacetat vorgelegt und unter Rühren auf 130°C erhitzt. Anschließend werden 20,7 g Maleinsäureanhydrid mit 1,84 g 2,2'-Azodi(2-methylbutyronitril) in 94 g 1-Methoxypropylacetat innerhalb von 90 Minuten zudosiert. Man rührt noch insgesamt 2 h bei 130°C, in denen 3 Mal mit jeweils 0,50 g 2,2'-Azodi(2-methylbutyronitril) nachinitiiert wird. Man erhält eine klare, gelbe, niederviskose Flüssigkeit (50%-ige Lösung; Mₙ=4200, M_{w}=11300).

### Stufe b:

100 g Stufe a (67 mmol Anhydridgruppen) werden langsam mit 90 mmol N,N-Dimethylaminopropylamin bei 130°C vermischt und 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 43 | AZ(_{gemessen}) = 45 |
| | SZ(_{gemessen}) = 2 |

100 g der Polymerlösung wird bei 120°C mit 2 g Benzylchlorid 4 h zur Reaktion gebracht und mit Butylglycol auf einen Festkörper von 50% eingestellt.

### Unterschiedliche Amine / quartäre Ammoniumsalze

### Polymer 16: Dimethylaminoethanol, 100 mol-% Struktureinheit I, 22 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol N,N-Dimethylaminoethanol zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 41 | AZ(_{gemessen}) = 41 |
| | OHZ(_{gemessen}) = 3 |
| | SZ(_{gemessen}) = 3 |

100 g der Polymerlösung wird bei 120°C mit 2 g Benzylchlorid 4 h zur Reaktion gebracht und mit Butylglycol auf einen Festkörper von 50% eingestellt.

### Polymer 17: N-(3-Aminopropyl)imidazol, 100 mol-% Struktureinheit I, 56 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol N-(3-Aminopropyl)imidazol zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 38 | AZ(_{gemessen}) = 39 |
| | SZ(_{gemessen}) = 1 |

100 g der Polymerlösung wird bei 120°C mit 5 g Benzylchlorid 4 h zur Reaktion gebracht und mit Butylglycol auf einen Festkörper von 50% eingestellt.

### Polymer 18: 4-Aminomethylpyridin, 100 mol-% Struktureinheit I, 11 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol 4-Aminomethylpyridin zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 40 | AZ(_{gemessen}) = 41 |
| | SZ(_{gemessen}) = 2 |

100 g der Polymerlösung wird bei 120°C mit 1 g Benzylchlorid 4 h zur Reaktion gebracht und mit Butylglycol auf einen Festkörper von 50% eingestellt.

### Polymer 19: Quarternisierung mit o-Kresylglycidylether, 100 mol-% Struktureinheit I, 60 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 40 | AZ(_{gemessen}) = 40 |
| | SZ(_{gemessen}) = 1 |

100 g der Polymerlösung wird bei 120°C mit 7,1 g o-Kresylglycidylether und 5,4 g Benzoesäure 4 h zur Reaktion gebracht und mit Butylglycol auf einen Festkörper von 50% eingestellt.

### Polymer 20: Quarternisierung mit Styroloxid, 100 mol-% Struktureinheit I, 61 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2070 (AZ=27,0) bei 110°C vermischt. Nach 30min werden 235,9 mmol N,N-Dimethylaminopropylamin (AZ=1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 40 | AZ(_{gemessen}) = 40 |
| | SZ(_{gemessen}) = 1 |

100 g der Polymerlösung wird bei 120°C mit 5 g Styroloxid und 5,3 g Benzoesäure 4 h zur Reaktion gebracht und mit Butylglycol auf einen Festkörper von 50% eingestellt.

### Unterschiedliche Seitenketten

### Polymer 21: Jeffamin M 2005, 100 mol-% Struktureinheit I, 83 % Quat;

47,5 g Kunstharz SMA 2000 (GSZ=335/141,5 mmol Anhydridgruppen) werden in 50 g Methoxypropylacetat angelöst und langsam mit 47,2 mmol Jeffamin M 2005 (AZ = 25) bei 110°C vermischt. Nach 30min werden 235,9 mmol N,N-Dimethylaminopropylamin (AZ = 1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 37 | AZ(_{gemessen}) = 37 |
| | SZ(_{gemessen}) = 1 |

100 g der Polymerlösung wird bei 120°C mit 7 g Benzylchlorid 4 h zur Reaktion gebracht und mit Butylglycol auf einen Festkörper von 50% eingestellt.

### Polymer 22: Jeffamin M 2070 / MPEG 750, 100 mol-% Struktureinheit I, 49 % Quat;

47,5 g Kunstharz SMA 2000 (GSZ=335/141,5 mmol Anhydridgruppen) werden in 50 g Methoxypropylacetat angelöst und langsam mit 27,2 mmol Jeffamin M 2070 (AZ = 27,0) und 20 mmol MPEG 750 bei 110°C vermischt. Nach 30min werden 235,9 mmol N,N-Dimethylaminopropylamin (AZ = 1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 46 | AZ(_{gemessen}) = 46 |
| | OHZ(_{gemessen}) = 1 |
| | SZ(_{gemessen}) = 1 |

100 g der Polymerlösung wird bei 120°C mit 5 g Benzylchlorid 4 h zur Reaktion gebracht und mit Butylglycol auf einen Festkörper von 50% eingestellt.

### Polymer 23: MPEG 750, 100 mol-% Struktureinheit I, 58 % Quat;

47,5 g Kunstharz SMA 2000 (GSZ=335/141,5 mmol Anhydridgruppen) werden in 50 g Methoxypropylacetat angelöst, 0,5 g Kaliumcarbonat hinzugefügt und über 3 h mit 47,2 mmol MPEG 750 bei 130°C zur Reaktion gebracht. Die OH-Zahl beträgt nach der Reaktion 2 mg KOH/g. Anschließend werden 235,9 mmol N,N-Dimethylaminopropylamin (AZ = 1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 62 | AZ(_{gemessen}) = 61 |
| | OHZ(_{gemessen}) = 1 |
| | SZ(_{gemessen}) = 2 |

100 g der Polymerlösung wird bei 120°C mit 8 g Benzylchlorid 4 h zur Reaktion gebracht und mit Butylglycol auf einen Festkörper von 50% eingestellt.

### Polymer 24: Jeffamin M 2070 / Polyester, 100 mol-% Struktureinheit I, 50 % Quat;

47,5 g Kunstharz SMA 2000 (GSZ=335/141,5 mmol Anhydridgruppen) werden in 50 g Methoxypropylacetat angelöst und langsam mit 27,2 mmol Jeffamin M 2070 (AZ = 27,0) und 20 mmol Polyester PE bei 110°C vermischt. Nach 30min werden 235,9 mmol N,N-Dimethylaminopropylamin (AZ = 1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(_{theo.}) = 44 | AZ(_{gemessen}) = 45 |
| | OHZ(_{gemessen}) = 2 |
| | SZ(_{gemessen}) = 2 |

100 g der Polymerlösung wird bei 120°C mit 5 g Benzylchlorid 4 h zur Reaktion gebracht und mit Butylglycol auf einen Festkörper von 50% eingestellt.

### Polymer 25: Jeffamin M 2005 / Polysiloxan, 100 mol-% Struktureinheit I, 63 % Quat;

47,5 g Kunstharz SMA 2000 (GSZ=335/141,5 mmol Anhydridgruppen) werden in 50 g Methoxypropylacetat angelöst und langsam mit 42,2 mmol Jeffamin M 2005 und 5 mmol Polysiloxan S bei 110°C vermischt. Nach 30min werden 235,9 mmol N,N-Dimethylaminopropylamin (AZ = 1105) zudosiert und bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Das Reaktionsprodukt wird 50%ig in Butylglycol angelöst.

| | |
|---|---|
| AZ(theo.) = 35 | AZ(_{gemessen}) = 36 |
| | OHZ(_{gemessen}) = 1 |
| | SZ(_{gemessen}) = 2 |

100 g der Polymerlösung wird bei 120°C mit 5 g Benzylchlorid 4 h zur Reaktion gebracht und mit Butylglycol auf einen Festkörper von 50% eingestellt.

### Polymer 26: keine Seitenkette, 100 mol-% Struktureinheit I, 5 % Quat;

47,5 g Kunstharz SMA 2000 (GSZ=335/141,5 mmol Anhydridgruppen) werden in 50 g Methoxypropylacetat und 100 g Butyldiglycolacetat angelöst und auf 50°C erwärmt. Anschließend werden langsam 283 mmol N,N-Dimethylaminopropylamin (AZ = 1105) zudosiert und die Reaktionsmischung bei 130°C 2h zur Reaktion gebracht. Im Anschluß wird die Temperatur auf 170°C erhöht und weitere 4 h zur Reaktion gebracht, wobei nach 2h zusätzlich Vakuum angelegt wird. Hierbei wird das Methoxypropylacetat und Reaktionswasser abdestilliert.

Die Polymerlösung wird mit Butyldiglycolacetat auf einen Festkörper von 50% eingestellt.

| | |
|---|---|
| AZ(_{theo.}) = 132 | AZ(_{gemessen}) = 131 |
| | SZ(_{gemessen}) = 1 |

100 g der Polymerlösung wird bei 120°C mit 1 g Benzylchlorid 4 h zur Reaktion gebracht und mit 75 g Disperbyk 111 versalzt und mit 75 g Butyldiglycolacetat auf einen Festkörper von 50% eingestellt.

### c) Anwendungstechnische Abprüfung

### Verwendung der erfindungsgemäßen Polymere als Netz- und Dispergiermittel zur Herstellung von Pigmentkonzentraten und deren Einsatz in Lacksystemen

### Ausgangsstoffe

| | |
|---|---|
| FPD-Bindemittel | Benzylmethacrylat-Methacrylsäure-Copolymer, 35%ig in Methoxypropylacetat, Säurezahl 53, von Byk-Chemie |
| Vinnol E 15/45 | Copolymer aus Vinylchlorid und Vinylacetat von Wacker Chemie |
| Ebecryl 81 | aminmodifiziertes Polyesteracrylat von Cytec |
| Ebecryl 450 | fettsäuremodifiziertes Polyesterhexaacrylat vonCytec |
| Irgacure 2022 | Photoinitiator von BASF |
| Irgacure 2100 | Photoinitiator von BASF |
| BYK 085 | Silikonhaltiger Polymer-Entschäumer von BYK-Chemie |
| BYK 377 | Silikonhaltiges Oberflächenadditiv von BYK-Chemie |
| BYK UV 3510 | Silikonhaltiges Oberflächenadditiv von BYK-Chemie |
| Spezial Schwarz 250 | Rußpigment von Evonik |
| Cromophtal Red A3B | Aminoanthrachinon-Pigment von BASF |
| Novoperm yellow PM3R | Isoindolin-Pigment von Clariant |
| Irgalith Rubine L4BH | Azopigment von BASF |
| Sun fast Blue 249-5412 | Phthalocyaninpigment von Sun Chemicals |
| PMA | Methoxypropylacetat |

### Herstellung eines Color Resist Pigmentkonzentrats

| | |
|---|---|
| FPD-Bindemittel | 7,14 |
| PMA | 30,86 |
| N+D-Mittel | 4,50 |
| Cromophtal Red A3B | 7,5 |
| | 50,00 |

Dispergierung mit Lau Paint Shaker DAS H [/A]200-K: Verhältnis Mahlgut zu Zirkoniumperlen (0,4 - 0,6 mm Durchmesser): 1 : 2 (Gewichtsteile), 300 min, Kühlstufe 3, normale Geschwindigkeit.

Die Viskositätsmessungen wurden mit dem Gerät Stresstech von Reologica Instruments AB durchgeführt. Hierbei fand das Zylindermesssystem CC 25 Verwendung. Die Ausgleichszeit vor Messbeginn betrug 5 s. Es wurden 12 Messpunkte bei einer Scherrate von 100 1/s mit einer Gesamtmessdauer von 48 s bei einer Messtemperatur von 25°C aufgenommen. Der angegebene Viskositätswert ist der Mittelwert der letzten 10 Messpunkte.

Die Transparenz wurde visuell beurteilt: 1 - 5, 1 = sehr gut, 5 = sehr schlecht

### Ergebnis

| **N+D-Mittel** | **Viskosität** sofort | **Transparenz** sofort | **Viskosität** 14 d / 40°C | **Transparenz** 14 d / 40°C |
|---|---|---|---|---|
| Polymer 1 | 16,9 mPas | 2 | 17,5 mPas | 2 |
| Polymer 2 | 25,5 mPas | 4 | 59,1 mPas | 4 |
| Polymer 3 | 13,6 mPas | 1 | 13,8 mPas | 1 |
| Polymer 4 | 14,3 mPas | 1 | 14,8 mPas | 1 |
| Polymer 5 | 15,4 mPas | 1 | 16,3 mPas | 1 |
| Polymer 6 | 19,8 mPas | 2 | 28,6 mPas | 2 |

Die Ergebnisse zeigen, dass mit dem erfindungsgemäße Polymere 3 eine niedrigviskosere und lagerstabilere Pigmentdispersion als mit dem Vergleich Polymer 1 erhalten wird. Weiterhin wird ein transparenter Lackfilm erhalten. Bei der Variation des Quarternisierungsgrades zeigten die quarternisierten Netz- und Dispergiermittel (Polymer 3-6) bessere Ergebnisse als das unquarternisierte Vergleichsprodukt Polymer 2.

### Herstellung pigmentierter Inkjet-Tinten

| | Spezial Schwarz 250 | Novoperm yellow PM3R |
|---|---|---|
| Butylglycolacetat | 34,25 | 36,25 |
| Cyclohexanon | 3,00 | 3,00 |
| Vinnol E 15/45 | 0,75 | 0,75 |
| N+D-Mittel | 6,0 | 5,0 |
| Pigment | 6,0 | 5,0 |
| | 50,00 | 50,00 |

Dispergierung mit Lau Paint Shaker DAS H [/A]200-K: Verhältnis Mahlgut zu Zirkoniumperlen (0,4 - 0,6 mm Durchmesser): 1 : 2 (Gewichtsteile), 960 min, Kühlstufe 3, normale Geschwindigkeit.

Die Viskositätsmessungen wurden mit dem Gerät Stresstech von Reologica Instruments AB durchgeführt. Hierbei fand das Zylindermesssystem CC 25 Verwendung. Die Ausgleichszeit vor Messbeginn betrug 5 s. Es wurden 12 Messpunkte bei einer Scherrate von 100 1/s mit einer Gesamtmessdauer von 48 s bei einer Messtemperatur von 25°C aufgenommen. Der angegebene Viskositätswert ist der Mittelwert der letzten 10 Messpunkte.

Die Transparenz wurde visuell beurteilt: 1 - 5, 1 = sehr gut, 5 = sehr schlecht

### Ergebnis

**Spezialschwarz 250**

| **N+D-Mittel** | **Viskosität** sofort | **Transparenz** Sofort | **Viskosität** 14 d / 40°C | **Transparenz** 14 d / 40°C |
|---|---|---|---|---|
| Polymer 1 | 8,5 mPas | 5 | 11,1 mPas | 5 |
| Polymer 3 | 8,5 mPas | 2 | 10,3 mPas | 2 |

**Novoperm yellow PM3R**

| **N+D-Mittel** | **Viskosität** sofort | **Transparenz** Sofort | **Viskosität** 14 d / 40°C | **Transparenz** 14 d / 40°C |
|---|---|---|---|---|
| Polymer 1 | 10,1 mPas | 2 | 19,8 mPas | 2 |
| Polymer 3 | 7,9 mPas | 1-2 | 7,9 mPas | 1-2 |

Die Ergebnisse zeigen, dass mit dem erfindungsgemäße Polymere 3 eine niedrigviskosere und lagerstabilere Pigmentdispersion als mit dem Vergleich Polymer 1 erhalten wird. Weiterhin wird ein transparenter Lackfilm erhalten.

### Herstellung pigmentierter UV-Druckfarben

### Pigmentkonzentrat:

| | Irgalith L4BH | Sun fast Blue 249-5412 | Spezialschwarz 250 |
|---|---|---|---|
| Ebecryl 81 | 66,6 | 66,6 | 45,78 |
| Ebecryl 450 | 10,3 | 10,3 | 18,7 |
| N+D-Mittel | 3,0 | 3,0 | 4,25 |
| Byk-085 | 0,1 | 0,1 | 1 |
| Pigment | 20,0 | 20,0 | 30,0 |

Dispergierung mit Dispermat CV: Verhältnis Mahlgut zu Glasperlen (1 mm Durchmesser): 1 : 1 (Gewichtsteile), 30 min, 40°C, 10000 U/min.

### Druckfarbe:

| | | | |
|---|---|---|---|
| Ebecryl 81 | 89,80 | 89,80 | 79,9 |
| Byk-377 | 0,20 | 0,20 | |
| Byk UV 3510 | | | 0,1 |
| Irgacure 2022 | 10,0 | 10,0 | |
| Irgacure 2100 | | | 20,0 |

### Auflackung:

| | | | |
|---|---|---|---|
| Pigmentkonzentrat | 6,0 | 6,0 | 5,0 |
| Lack | 4,0 | 4,0 | 5,0 |

Nach vollständiger Trocknung wurde der Glanz wird mit einem Glanzmessgerät Typ "Micro Tri Gloss" (Hersteller: BYK Gardner, Geretsried) unter einem Winkeln von 20° gemessen.

Die Viskosität und Farbstärke wurde visuell beurteilt: 1 - 5, 1 = sehr gut, 5 = sehr schlecht

### Ergebnisse:

### Sun fast Blue 249-5412

| **N+D-Mittel** | **Viskosität PC** sofort | **Farbstärke** sofort | **Glanz** sofort 20° | **Viskosität PC** 5 d / 40°C | **Farbstärke** 5 d / 40°C |
|---|---|---|---|---|---|
| Polymer 7 | 1 | 1 | 54 | 4 | 2 |
| Polymer 8 | 1 | 1 | 59 | 3 | 1-2 |
| Polymer 9 | 1 | 1 | 60 | 2 | 1 |
| Polymer 10 | 1 | 1 | 61 | 2 | 1 |
| Polymer 11 | 1 | 1 | 65 | 2 | 1 |
| Polymer 12 | 1 | 1 | 62 | 2 | 1 |

### Irgalith L4BH

| **N+D-Mittel** | **Viskosität PC** sofort | **Farbstärke** sofort | **Glanz** 20° | **Viskosität PC** 5 d / 40°C | **Farbstärke** 5 d / 40°C |
|---|---|---|---|---|---|
| Polymer 7 | 3/2 | 2 | 60 | 5 | 3 |
| Polymer 8 | 2 | 2 | 61 | 3 | 2 |
| Polymer 9 | 2 | 2 | 62 | 3 | 2 |
| Polymer 10 | 2 | 2 | 63 | 3 | 2 |
| Polymer 11 | 2 | 2 | 64 | 3 | 2 |
| Polymer 12 | 2 | 2 | 63 | 3 | 2 |

### Spezialschwarz 250

| **N+D-Mittel** | **Viskosität PC** sofort | **Farbstärke** sofort | **Glanz** 20° | **Viskosität PC** 5 d / 40°C | **Farbstärke** 5 d / 40°C |
|---|---|---|---|---|---|
| Polymer 7 | 2 | 2 | 7 | 3 | 3 |
| Polymer 8 | 1 | 1 | 7 | 2 | 2 |
| Polymer 9 | 1 | 1 | 8 | 2 | 1 |
| Polymer 10 | 1 | 1 | 9 | 2 | 1 |
| Polymer 11 | 1 | 1 | 8 | 2 | 1 |
| Polymer 12 | 1 | 1 | 8 | 2 | 1 |

Die Ergebnisse zeigen, dass mit den erfindungsgemäßen Copolymeren 8 - 12, die Bisamidstrukturen enthalten, pigmentierte Lacke mit besseren Eigenschaften hinsichtlich der Viskosität, Lagerstabilität, des Glanzes und der Farbstärke, erhalten werden als mit Polymer 7, das keine Bisamidstrukturen enthält.

## Patentansprüche

1. Copolymer enthaltend
i) 40-73 Mol-% einer Basisstruktureinheit (A) sowie
ii) 27-60 Mol-% einer substituierten Dicarbonsäurederivatstruktureinheit (B),
wobei die Basisstruktureinheit (A) durch Umsetzung eines eine olefinische Doppelbindung enthaltenden Monomers (a) erzeugt wird sowie keine unter die Dicarbonsäurederivatstruktureinheit (B) fallende Spezies umfasst,
die substituierte Dicarbonsäurederivatstruktureinheit (B) vorliegt gemäß einer oder mehrerer der allgemeinen Formeln aus der Gruppe bestehend aus (I-1), (I-2), (I-3), (I-4), (I-5), (I-6), (II-1), (II-2), (II-3), (III-1), (III-2), (III-3), (IV-1) sowie (IV-2) 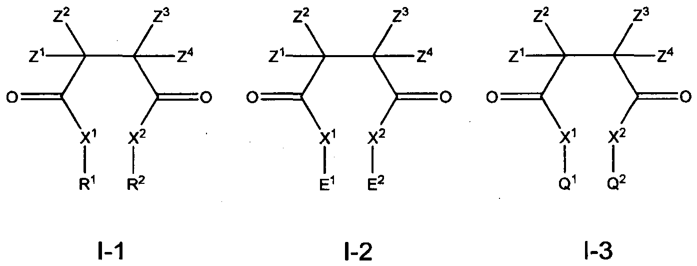 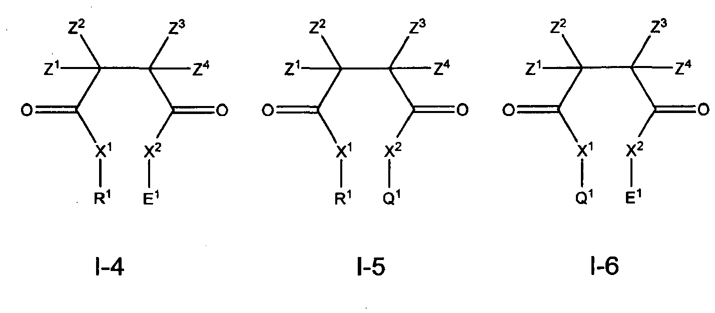 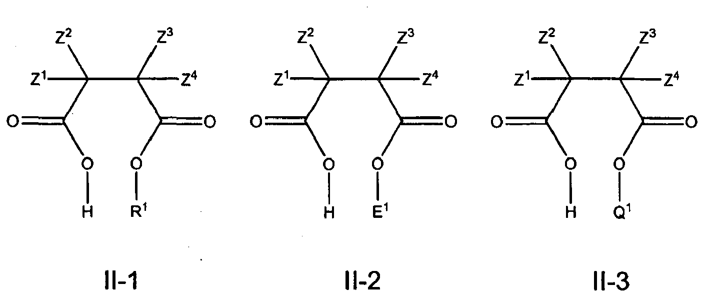 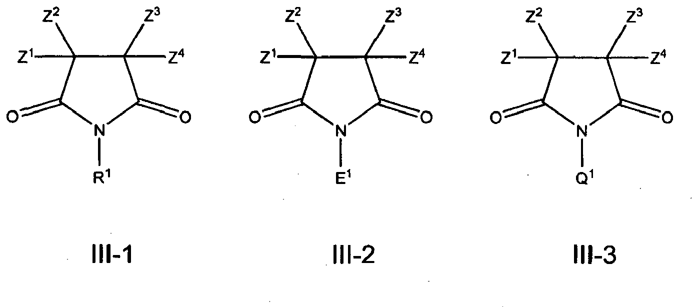 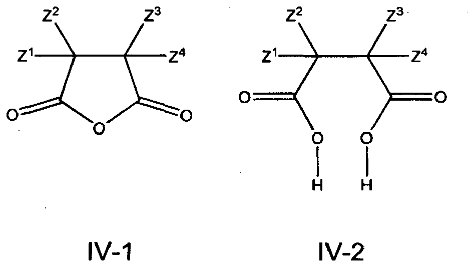 mit
Z1, Z2, Z3 und Z4 jeweils gleich oder verschieden sowie jeweils unabhängig voneinander repräsentiert durch Wasserstoff, einen linearen C₁-C₄-Alkylrest und/ oder Polymerhauptketteverknüpfungsstellen, mit der Maßgabe, dass pro allgemeiner Formel genau zwei Polymerhauptketteverknüpfungsstellen vorliegen,
X¹ und X² jeweils gleich oder verschieden sowie jeweils unabhängig voneinander repräsentiert durch NH und/oder O,
R¹ und R² jeweils gleich oder verschieden sowie jeweils unabhängig voneinander repräsentiert durch einen verzweigten oder unverzweigten, gesättigten oder ungesättigten, mindestens vier Kohlenstoffatome sowie mindestens drei Sauerstoffatome enthaltenden organischen Rest, der keine Aminfunktionen und keine Ammoniumfunktionen aufweist,
E¹ und E² jeweils gleich oder verschieden sowie jeweils unabhängig voneinander repräsentiert durch einen N,N-disubstituierten Aminrest der allgemeinen Formel (V-E) 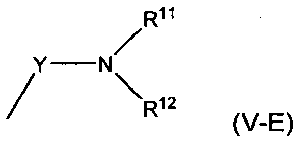 mit
R¹¹, R¹² jeweils gleich oder verschieden sowie jeweils unabhängig voneinander repräsentiert durch eine substituierte oder nicht substituierte verzweigte oder unverzweigte C₁-C₂₄-Alkylgruppe, durch eine substituierte oder nicht substituierte C₄-C₁₀ - Zykloalkylgruppe, durch eine substituierte oder nicht substituierte C₆-C₁₈ -Arylgruppe und/ oder eine substituierte oder nicht substituierte verzweigte oder unverzweigte C₇-C₁₈-Arylalkylgruppe, wobei R¹¹ und R¹² zusammen mit dem R¹¹ und R¹² verbindenden N-Atom gemeinsam eine aromatische oder aliphatische, substituierte oder nicht substituierte, zyklische C₃-C₁₀ - Gruppe ausbilden können,
Y gleich oder verschieden sowie repräsentiert durch eine substituierte oder nicht substituierte verzweigte oder unverzweigte C₁-C₂₄ - Alkylengruppe und/ oder eine substituierte oder nicht substituierte C₆-C₁₈-Arylengruppe
Q¹ und Q² jeweils gleich oder verschieden sowie jeweils unabhängig voneinander repräsentiert durch einen quartären Ammoniumrest der allgemeinen Formel (V-Q) 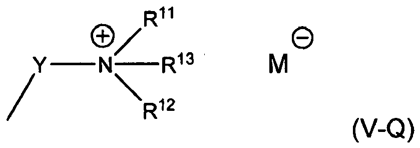 mit
R¹¹, R¹² der gleichen Entsprechung wie in der allgemeinen Formel (V-E),
Y der gleichen Entsprechung wie in der allgemeinen Formel (V-E),
R¹³ gleich oder verschieden sowie repräsentiert durch Wasserstoff, durch eine substituierte oder nicht substituierte verzweigte oder unverzweigte C₁-C₂₄ -Alkylgruppe, durch eine substituierte oder nicht substituierte C₄-C₁₀ - Zykloalkylgruppe, durch eine substituierte oder nicht substituierte C₆-C₁₈ -Arylgruppe und/ oder eine substituierte oder nicht substituierte verzweigte oder unverzweigte C₇-C₁₈ - Arylalkylgruppe,
M⁻ gleich oder verschieden sowie repräsentiert durch ein Anion,
wobei der molare Anteil der Struktureinheiten, welche der Gruppe bestehend aus (I-1), (I-2), (I-3), (I-4), (I-5) sowie (I-6) zugehören bezogen auf die Gesamtheit der Struktureinheiten, die der Dicarbonsäurederivatstruktureinheit (B) zuzurechnen sind, 5 - 100 % beträgt,
der molare Anteil der Struktureinheiten, welche der Gruppe bestehend aus (I-2), (I-3), (I-4), (I-5), (I-6), (II-2), (II-3), (III-2) sowie (III-3) zugehören bezogen auf die Gesamtheit der Struktureinheiten, die der Dicarbonsäurederivatstruktureinheit (B) zuzurechnen sind, 5 - 100 % beträgt und
bezüglich der Dicarbonsäurederivatstruktureinheit (B) der molare Anteil der Substituenten, welche der Gruppe bestehend aus Q¹ sowie Q² angehören bezogen auf die Gesamtheit der Substituenten, die der Gruppe bestehend aus E¹, E², Q¹ sowie Q² angehören, 10 - 100 % beträgt.

2. Copolymer nach Anspruch 1 enthaltend,
i) 48 - 70, bevorzugt 50 - 67 Mol-% der Basisstruktureinheit (A) sowie
ii) 30 - 52, bevorzugt 33 - 50 Mol-% der substituierten Dicarbonsäurederivatstruktureinheit (B).

3. Copolymer nach Anspruch 1 oder 2, **dadurch gekennzeichnet, dass** das die Basisstruktureinheit (A) erzeugende, eine olefinische Doppelbindung enthaltende Monomer (a) ausgewählt ist aus einem oder mehreren der Monomere der Gruppe bestehend aus Alkyl(meth)acrylaten sowie Alkenyl(meth)acrylaten von geradkettigen, verzweigten oder cycloaliphatischen Mono-Alkoholen mit 1 bis 22 Kohlenstoffatomen oder von geradkettigen oder verzweigten aromatischen oder gemischt aromatischaliphatischen Monoalkoholen mit 1 bis 22 Kohlenstoffatomen, Mono(meth)acrylaten von oligomeren oder polymeren Ethern, (Meth)acrylate von halogenierten Alkoholen; oxiranhaltige (Meth)acrylate, Styrol, substituierte Styrole, α-Olefine, Vinylether, Allylether; Methacrylnitril, Acrylnitril; Vinylgruppen aufweisende cycloaliphatische Heterocyclen mit wenigstens einem N-Atom als Ringglied, Vinylester von Monocarbonsäuren mit 1 bis 20 Kohlenstoffatomen, N-Alkyl- und N,N-Dialkyisubstituierte Acrylamide mit geradkettigen, verzweigten oder cycloaliphatischen Alkylgruppen mit 1 bis 22 Kohlenstoffatomen, ethylenisch ungesättigte Monomere mit mindestens einer carbonsauren, phosphonsauren, phosphorsauren und/oder sulfonsauren Gruppe und ungesättigten Fettsäuren.

4. Copolymer nach einem der Ansprüche 1 bis 3, **dadurch gekennzeichnet, dass** mindestens 60 Mol-%, bevorzugt mindestens 90 Mol-%, besonders bevorzugt 100 Mol-% der der Basisstruktureinheit (A) zugehörigen Struktureinheiten durch Umsetzung von Styrol erzeugt werden.

5. Copolymer nach einem der Ansprüche 1 bis 4, **dadurch gekennzeichnet, dass** R¹ und R² jeweils unabhängig voneinander vorliegen als Polyetherrest, als Polyesterrest, als Polyetherpolyesterrest, als Poly-2-alkyl-2-oxazolinrest, als Poly-2-alkyl-2-oxazinrest und/oder als Polysiloxanrest.

6. Copolymer nach einem der Ansprüche 1 bis 5, **dadurch gekennzeichnet, dass** R¹¹ und R¹² zusammen mit dem R¹¹ und R¹² verbindenden N-Atom gemeinsam einen aromatischen, substituierten oder nicht substituierten Heterozyklus ausbilden, der insgesamt zwei N-Atome aufweist.

7. Copolymer nach einem der Ansprüche 1 bis 6, **dadurch gekennzeichnet, dass** M⁻ vorliegt als Carboxylat, als Phosphat, als Phosphatmonoester, als Phosphatdiester, als Alkylsulfonat, als Sulfat und/ oder als Halogenid.

8. Copolymer nach einem der Ansprüche 1 bis 7, **dadurch gekennzeichnet, dass**
der molare Anteil der Struktureinheiten, welche der Gruppe bestehend aus (I-1), (I-2), (I-3), (I-4), (I-5) sowie (I-6) zugehören bezogen auf die Gesamtheit der Struktureinheiten, die der Dicarbonsäurederivatstruktureinheit (B) zuzurechnen sind, 10 - 80, bevorzugt 25 - 75 % beträgt,
der molare Anteil der Struktureinheiten, welche der Gruppe bestehend aus (I-2), (I-3), (I-4), (I-5), (I-6), (II-2), (II-3), (III-2) sowie (III-3) zugehören bezogen auf die Gesamtheit der Struktureinheiten, die der Dicarbonsäurederivatstruktureinheit (B) zuzurechnen sind, 10 - 90, bevorzugt 20 - 80 % beträgt und
bezüglich der Dicarbonsäurederivatstruktureinheit (B) der molare Anteil der Substituenten, welche der Gruppe bestehend aus Q¹ sowie Q² angehören bezogen auf die Gesamtheit der Substituenten, die der Gruppe bestehend aus E¹, E², Q¹ sowie Q² angehören, 20 - 95, bevorzugt 25 - 90 % beträgt.

9. Copolymer nach einem der Ansprüche 1 bis 8 enthaltend 12 - 500, bevorzugt 20 - 200 Struktureinheiten, welche aus der Basisstruktureinheit (A) und der Dicarbonsäurederivatstruktureinheit (B) ausgewählt sind.

10. Herstellung eines Copolymers gemäß eines der Ansprüche 1 bis 9, **dadurch gekennzeichnet, dass** zunächst ein Copolymervorprodukt durch Polymerisation hergestellt wird, wobei durch anschließende Pfropfung die Substituenten vom Typ (I), (II) und/ oder (III) der Dicarbonsäurederivatstruktureinheit (B) ausgebildet werden.

11. Herstellung nach Anspruch 10, **dadurch gekennzeichnet, dass** die anschließende Pfropfung durch den Einsatz von Reaktionswasser befreienden Maßnahmen, bevorzugt durch Erwärmung auf eine Temperatur von 120 bis 200 °C, solange durchgeführt wird, bis der molare Anteil der Struktureinheiten, welche der Gruppe bestehend aus (I-1), (I-2), (I-3), (I-4), (I-5) sowie (I-6) zugehören bezogen auf die Gesamtheit der Struktureinheiten, die der Dicarbonsäurederivatstruktureinheit (B) zuzurechnen sind, mindestens 5 %, bevorzugt mindestens 10 %, besonders bevorzugt mindestens 25 %, beträgt.

12. Dispersion, welche ein Dispergiermedium sowie dispergierten partikulären Feststoff enthält, der bevorzugt in Form eines anorganischen Füllstoffs, und/oder in Form eines anorganischen oder organischen Pigments und/oder in Form von Kohlenstoff-Nanoröhren und/oder in Form von Graphenen, vorliegt, wobei bezogen auf das Gesamtgewicht der Dispersion 0,1-10 Gew.-%, bevorzugt 0,3 bis 4,5 Gew.-%, eines Copolymers gemäß einem der Ansprüche 1 bis 9 als Netz- und Dispergiermittel eingesetzt wird.

13. Dispersion nach Anspruch 12, die als Tinte oder Beschichtungsmittel, insbesondere als Lack, vorliegt.

14. Partikelzubereitung enthaltend 30,0 bis 99,9 Gew.% partikulären Feststoff sowie 0,1 - 70,0 Gew.% eines Copolymers gemäß einem der Ansprüche 1 bis 9.

15. Verwendung eines Copolymers gemäß einem der Ansprüche 1 bis 9 als Netz- und Dispergiermittel.

## Claims

1. A copolymer containing
i) 40-73 mol% of a basic structural unit (A), as well as
ii) 27-60 mol% of a substituted dicarboxylic acid derivative structural unit (B), wherein the basic structural unit (A) is generated by converting a monomer (a) containing an olefinic double bond, and does not comprise any species falling under the dicarboxylic acid derivative structural unit (B),
the substituted dicarboxylic acid derivative structural unit (B) exists in accordance with one or more of the general formulae out of the group consisting of (I-1), (I-2), (I-3), (I-4), (I-5), (I-6), (II-1), (II-2), (II-3), (III-1), (III-2), (III-3), (IV-1) and (IV-2) 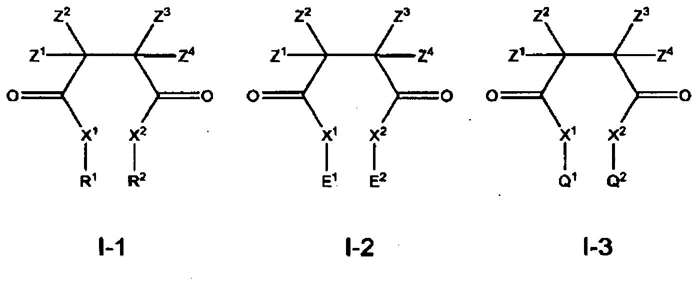 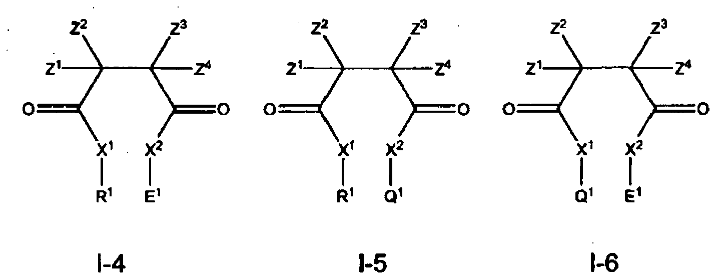 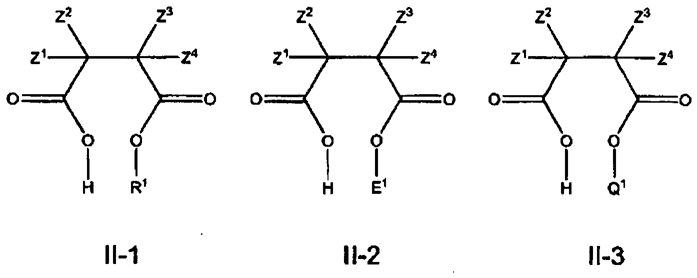 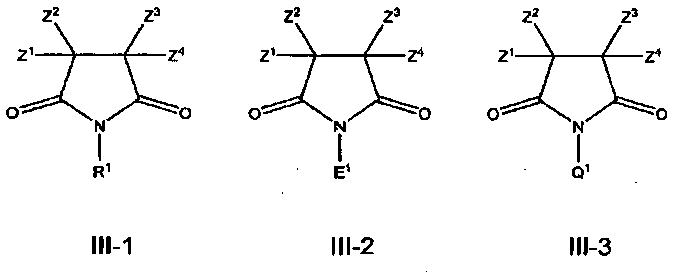 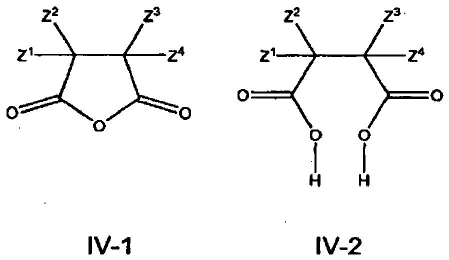 with
Z1, Z2, Z3 and Z4, in each case being formed the same way or differently, as well as, in each case, independently from one another, and being represented by hydrogen, a linear C₁-C₄ alkyl radical and/or polymer main chain connection points, with the proviso that exactly two polymer main chain connection points exist for each general formula,
X¹ und X² are, in each case, formed identically or differently, as well as being formed in each case independently of one another, and being represented by NH and/or O,
R¹ and R² are, in each case, formed either identically or differently, as well as, in each case, independently from one another, and are represented by a branched or unbranched, saturated or unsaturated organic radical, containing at least four carbon atoms, as well as at least three oxygen atoms, which have no amine functions and no ammonium functions,
E¹ and E², in each case being formed identically or differently, as well as, in each case, independently of one another, represented by an N.N di-substituted amine radical having the general formula (V-E) 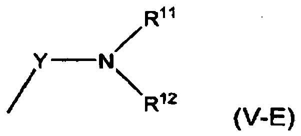 with
R¹¹, R¹² in each case being formed identically or differently, as well as, in each case, independently of one another, represented by a substituted or unsubstituted, branched or unbranched C₁-C₂₄ alkyl group, a substituted or unsubstituted C₄-C₁₀ cycloalkyl group, a substituted or unsubstituted C₆-C₁₈ aryl group and/or a substituted or unsubstituted branched or unbranched C₇-C₁₈ aryl alkyl group, wherein R¹¹ und R¹² can, together with the N atom connecting R¹¹ and R¹², form an aromatic or aliphatic, substituted or unsubstituted, cyclic C₃-C₁₀ group,
Y, being formed identically or differently, as well as being represented by a substituted or unsubstituted, branched or unbranched C₁-C₂₄ alkylene group and/or a substituted or unsubstituted C₆-C₁₈ arylene group
Q¹ und Q² in each case being formed identically or differently, as well as, in each case, independently of one another, and being represented by a quaternary ammonium radical of the general formula (V-Q) 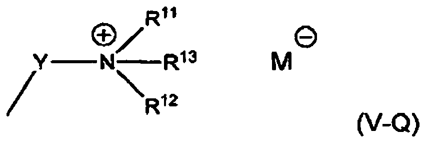 with
R¹¹, R¹² of the same equivalence as in the general formula (V-E),
Y of the same equivalence as in the general formula (V-E),
R¹³ being formed identically or differently, as well as being represented by hydrogen, through a substituted or unsubstituted, branched or unbranched C₁-C₂₄ alkyl group, through a substituted or unsubstituted C₄-C₁₀-cycloalkyl group, through a substituted or unsubstituted C₆-C₁₈ aryl group and/or a substituted or unsubstituted, branched or unbranched C₇-C₁₈ aryl alkyl group,
M- being formed identically or differently, as well as represented by an anion,
wherein the molar fraction of the structural units, which belong to the group consisting of (1-1), (1-2), (I-3), (1-4), (I-5) and (I-6), with regard to the totality of the structural units attributable to the dicarboxylic acid derivative structural unit (B) amounts to 5-100 %;
the molar fraction of the structural units, which belong to the group consisting of (I-2), (1-3), (I-4), (1-5), (1-6), (II-2), (II-3), (III-2) and (III-3), with regard to the totality of the structural units attributable to the dicarboxylic acid derivative structural unit (B) amounts to 5-100 %; and
in regard to the dicarboxylic acid derivative structural unit (B) the molar fraction of the substituents belonging to the group consisting of Q¹ and Q², in regard to the totality of the substituents belonging to the group consisting of E¹, E², Q¹ and Q² amounts to 10-100 %.

2. The copolymer in accordance with Claim 1, containing
i) 48-70, preferably 50-67 mol% of the basic structural unit (A), as well as
ii) 30-52, preferably 33-50 mol% of the substituted dicarboxylic acid derivative structural unit (B).

3. The copolymer in accordance with Claim 1 or 2, **characterised in that** the monomer (a) generating the basic structural unit (A), containing an olefinic double bond, is selected from one or more of the monomers (a) in the group consisting of alkyl (meth)acrylates, as well as alkenyl (meth)acrylates of straight chain, branched or cycloaliphatic mono-alcohols with 1 to 22 carbon atoms or straight chain or branched aromatic or mixed aromatic/aliphatic mono-alcohols with 1 to 22 carbon atoms, mono(meth)acrylates of oligomeric or polymeric ethers, (meth)acrylate of halogenated alcohols; oxirane-containing (meth)acrylates, styrene, substituted styrenes, α-olefins, vinyl ether, allylic ether; methacrylonitrile, acrylonitrile; cycloaliphatic heterocycles possessing vinyl groups having at least one N atom as a ring member, vinyl ester of monocarboxylic acids with 1 to 20 carbon atoms, N-alkyl and N.N dialkyl-substituted acrylamides with straight chain, branched or cycloaliphatic alkyl groups having 1 to 22 carbon atoms, ethylenically unsaturated monomers having at least one carboxylic acid, phosphine acid, phosphoric acid and/or sulphonic acid group and unsaturated fatty acids.

4. The copolymer in accordance with one of Claims 1 to 3, **characterised in that** at least 60 mol%, preferably at least 90 mol%, especially preferably 100 mol% of the structural units belonging to the basic structural unit (A) are generated by converting styrene.

5. The copolymer in accordance with one of Claims 1 to 4, **characterised in that** R¹ and R² each exist independently of one another as polyether radical, polyester radical, polyether-polyester radical, poly-2-alkyl-2-oxazoline radical, poly-2-alkyl-2-oxazine radical and/or polysiloxane radical.

6. The copolymer in accordance with one of Claims 1 to 5, **characterised in that** R¹¹ and R¹² together with the N atom connecting R¹¹ and R¹² jointly form an aromatic, substituted or unsubstituted heterocycle, which contains two N atoms in total.

7. The copolymer in accordance with one of Claims 1 to 6, **characterised in that** M⁻ exists as a carboxylate, a phosphate, a phosphate monoester, a phosphate diester, an alkyl sulfonate, a sulphate and/or a halogenide.

8. The copolymer in accordance with one of Claims 1 to 7, **characterised in that** the molar fraction of the structural units, which belong to the group consisting of (I-1), (1-2), (I-3), (I-4), (I-5) and (I-6), with regard to the totality of the structural units attributable to the dicarboxylic acid derivative structural unit (B) amounts to 10 - 80, preferably 25 - 75%,
the molar fraction of the structural units, which belong to the group consisting of (I-2), (I-3), (I-4), (I-5), (I-6), (II-2), (II-3), (III-2) and (III-3), with regard to the totality of the structural units attributable to the dicarboxylic acid derivative structural unit (B) amounts to 10 - 90, preferably 20 - 80%; and
in regard to the dicarboxylic acid derivative structural unit (B) the molar fraction of the substituents belonging to the group consisting of Q¹ and Q², in regard to the totality of the substituents belonging to the group consisting of E¹, E², Q¹ and Q² amounts to 20 - 95, preferably 25 - 90%.

9. The copolymer in accordance with one of Claims 1 to 8 containing 12 - 500, preferably 20 - 200 structural units, which are selected from the basic structural unit (A) and the dicarboxylic acid derivative structural unit (B).

10. Creation of a copolymer in accordance with one of Claims 1 to 9, **characterised in that** initially a preliminary copolymer product is made through polymerisation, wherein the substituents of types (I), (II) and/or (III) of the dicarboxylic acid derivative structural unit (B) are formed by means of subsequent grafting.

11. Creation in accordance with Claim 10, **characterised in that** the subsequent grafting is carried out through the utilisation of measures releasing reaction water, preferably by heating it to a temperature of 120 to 200 °C, until such time as the molar fraction of the structural units belonging to the group consisting of (I-1), (I-2), (I-3), (I-4), (I-5) and (I-6), in relation to the totality of the structural units attributable to the dicarboxylic acid derivative structural unit (B) amounts to at least 5%, preferably at least 10%, especially preferably at least 25%.

12. A dispersion containing a dispersion medium, as well as a dispersed particulate solid, preferably existing in the form of an anorganic filler, and/or in the form of an anorganic or organic pigment and/or in the form of carbon nanotubes and/or in the form of graphenes, wherein, in relation to the total weight of the dispersion 0.1-10 weight per cent, preferably 0.3 to 4.5 weight per cent, of a copolymer in accordance with one of Claims 1 to 9 is utilised as a wetting and dispersing agent.

13. Dispersion in accordance with Claim 12, which exists as an ink or coating agent, in particular as a varnish.

14. A particle preparation containing 30.0 to 99.9 weight per cent particular solid, as well as 0.1 - 70.0 weight per cent of a copolymer in accordance with one of Claims 1 to 9.

15. Use of a copolymer in accordance with one of Claims 1 to 9 as a wetting and dispersing agent.

## Revendications

1. Copolymère contenant
i) 40 à 73 % en moles d'un motif structurel de base (A), ainsi que
ii) 27 à 60 % en moles d'un motif structurel dérivé de l'acide dicarboxylique substitué (B),
dans lequel le motif structurel de base (A) est généré par conversion d'un monomère (a) contenant une double liaison oléfinique et ne comporte pas d'espèce correspondant au motif structurel dérivé de l'acide dicarboxylique (B),
le motif structurel dérivé de l'acide dicarboxylique substitué (B) étant présent selon une ou plusieurs des formules générales issues du groupe composé de (1-1), (I-2), (1-3), (I-4), (I-5), (I-6), (II-1), (II-2), (II-3), (III-1), (III-2), (III-3), (IV-1) et (IV-2), 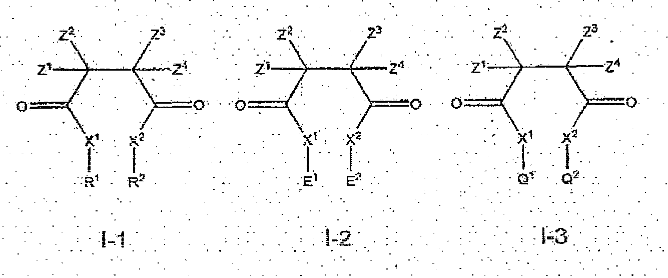 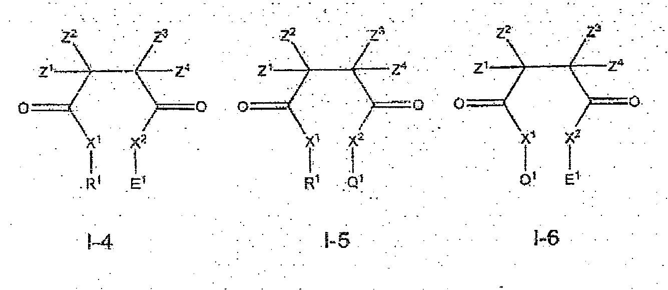 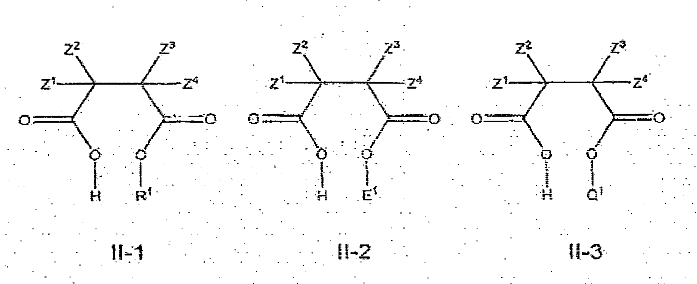 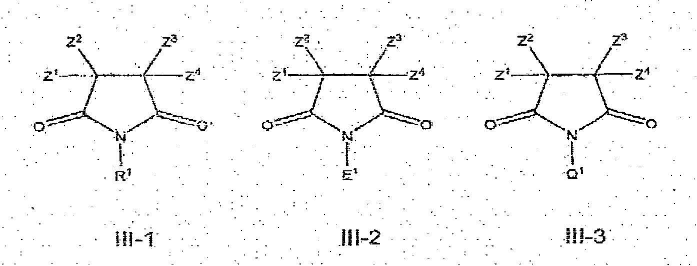 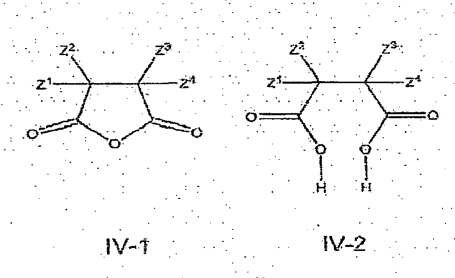 dans lesquelles
Z¹, Z², Z³ et Z⁴, respectivement identiques ou différents, représentent chacun indépendamment les uns des autres un atome d'hydrogène, un groupement alkyle en C₁ à C₄ linéaire et/ou des points de liaison à la chaîne principale du polymère, à la condition qu'il existe par formule générale exactement deux points de liaison à la chaîne principale du polymère,
X¹ et X², respectivement identiques ou différents, représentent chacun indépendamment l'un de l'autre NH et/ou O,
R¹ et R², respectivement identiques ou différents, représentent chacun indépendamment l'un de l'autre un radical organique ramifié ou non ramifié, saturé ou insaturé, comportant au moins quatre atomes de carbone et au moins trois atomes d'oxygène, qui ne présente pas de fonction amine et pas de fonction ammonium,
E¹ et E², respectivement identiques ou différents, représentent chacun indépendamment l'un de l'autre un groupement amine N,N-disubstitué de formule générale (V-E), 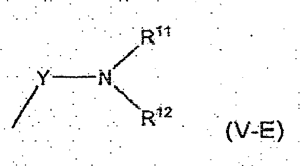 dans laquelle
R¹¹, R¹², respectivement identiques ou différents, représentent chacun indépendamment l'un de l'autre un groupement alkyle en C₁ à C₂₄ substitué ou non substitué, ramifié ou non ramifié, un groupement cycloalkyle en C₄ à C₁₀ substitué ou non substitué, un groupement aryle en C₆ à C₁₈ substitué ou non substitué, et/ou un groupement arylalkyle en C₇ à C₁₈ substitué ou non substitué, ramifié ou non ramifié, où R¹¹ et R¹² peuvent former avec l'atome N liant R¹¹ et R¹² un groupement en C₃ à C₁₀ cyclique, aromatique ou aliphatique, substitué ou non substitué,
Y, identique ou différent, représente un groupement alkylène en C₁ à C₂₄ substitué ou non substitué, ramifié ou non ramifié, et/ou un groupement arylène en C₆ à C₁₈ substitué ou non substitué,
Q¹ et Q², respectivement identiques ou différents, représentent chacun indépendamment l'un de l'autre un radical ammonium quaternaire de formule générale (V-Q), 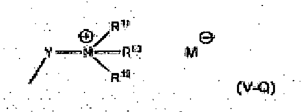 dans laquelle
R¹¹, R¹² ont la même signification que dans la formule générale (V-E),
Y a la même signification que dans la formule générale (V-E),
R¹³, identique ou différent, représente un atome d'hydrogène, un groupement alkyle en C₁ à C₂₄ substitué ou non substitué, ramifié ou non ramifié, un groupement cycloalkyle en C₄ à C₁₀ substitué ou non substitué, un groupement aryle en C₆ à C₁₈ substitué ou non substitué et/ou un groupement arylalkyle en C₇ à C₁₈ substitué ou non substitué, ramifié ou non ramifié,
M⁻, identique ou différent, représente un anion,
où la fraction molaire des motifs structurels qui appartiennent au groupe composé de (1-1), (I-2), (I-3), (I-4), (I-5) et (I-6), sur la base de l'ensemble des motifs structurels que compte le motif structurel dérivé de l'acide dicarboxylique (B), est comprise entre 5 et 100 %,
la fraction molaire des motifs structurels qui appartiennent au groupe composé de (I-2), (I-3), (I-4), (I-5), (I-6), (II-2), (II-3), (III-2) et (III-3), sur la base de la totalité des motifs structurels que compte le motif structurel dérivé de l'acide dicarboxylique (B), est comprise entre 5 et 100 %, et pour ce qui est du motif structurel dérivé de l'acide dicarboxylique (B), la fraction molaire des substituants qui appartiennent au groupe composé de Q¹ et Q², sur la base de la totalité des substituants qui appartiennent au groupe composé de E¹, E², Q¹ et Q², est comprise entre 10 et 100 %.

2. Copolymère selon la revendication 1, contenant
i) 48 à 70, de préférence 50 à 67 % en moles du motif structurel de base (A), et
ii) 30 à 52, de préférence 33 à 50 % en moles du motif structurel dérivé de l'acide dicarboxylique substitué (B).

3. Copolymère selon la revendication 1 ou 2, **caractérisé en ce que** le monomère (a) contenant une double liaison oléfinique et générant le motif structurel de base (A) est sélectionné parmi un ou plusieurs des monomères du groupe composé d'alkyl(méth)acrylates et d'alcényl(méth)acrylates de monoalcools linéaires, ramifiés ou cycloaliphatiques comportant 1 à 22 atomes de carbone ou de monoalcools linéaires ou ramifiés, aromatiques ou aromatiques-aliphatiques comportant 1 à 22 atomes de carbone, de mono(méth)acrylates d'éthers oligomères ou polymères, de (méth)acrylate d'alcools halogénés ; de (méth)acrylate contenant un oxirane ; de styrène, de styrène substitué, d'α-oléfines, de vinyléther, d'allyléther ; de méthacrylonitrile, d'acrylonitrile ; d'hétérocycles cycloaliphatiques présentant des groupements vinyle et comportant au moins un atome N en tant que membre du cycle, du vinylester d'acides monocarboxyliques comportant 1 à 20 atomes de carbone, d'acrylamides N-alkyl- et N,N-dialkyl-substitués présentant des groupements alkyle linéaires, ramifiés ou cycloaliphatiques comportant 1 à 22 atomes de carbone, de monomères insaturés en éthylène et comportant au moins un groupement acide carboxylique, acide phosphonique, acide phosphorique et/ou acide sulfonique, et d'acides gras insaturés.

4. Copolymère selon l'une des revendications 1 à 3, **caractérisé en ce qu'**au moins 60 % en moles, de préférence au moins 90 % en moles, de façon particulièrement préférée 100 % en moles, des motifs structurels appartenant au motif structurel de base (A) sont générés par conversion de styrène.

5. Copolymère selon l'une des revendications 1 à 4, **caractérisé en ce que** R¹ et R² sont présents respectivement indépendamment l'un de l'autre en tant que radical polyéther, en tant que radical polyester, en tant que radical polyétherpolyester, en tant que radical poly-2-alkyl-2-oxazoline, en tant que radical poly-2-alkyl-2-oxazine et/ou en tant que radical polysiloxane.

6. Copolymère selon l'une des revendications 1 à 5, **caractérisé en ce que** R¹¹ et R¹² forment avec l'atome N reliant R¹¹ et R¹² un hétérocycle aromatique, substitué ou non substitué, qui présente au total deux atomes de N.

7. Copolymère selon l'une des revendications 1 à 6, **caractérisé en ce que** M⁻ est présent sous la forme d'un carboxylate, d'un phosphate, d'un monoester de phosphate, d'un diester de phosphate, d'un alkylsulfonate, d'un sulfate et/ou d'un halogénure.

8. Copolymère selon l'une des revendications 1 à 7, **caractérisé en ce que**
la fraction molaire des motifs structurels qui appartiennent au groupe composé de (I-1), (I-2), (I-3), (1-4), (I-5) et (I-6), sur la base de l'ensemble des motifs structurels que compte le motif structurel dérivé de l'acide dicarboxylique (B), est comprise entre 10 et 80, de préférence entre 25 et 75 %,
la fraction molaire des motifs structurels qui appartiennent au groupe composé de (I-2), (1-3), (I-4), (1-5), (1-6), (II-2), (II-3), (III-2) et (III-3), sur la base de la totalité des motifs structurels que compte le motif structurel dérivé de l'acide dicarboxylique (B), est comprise entre 10 et 90, de préférence entre 20 et 80 %, et
pour ce qui est du motif structurel dérivé de l'acide dicarboxylique (B), la fraction molaire des substituants qui appartiennent au groupe composé de Q¹ et Q², sur la base de la totalité des substituants qui appartiennent au groupe composé de E¹, E², Q¹ et Q², est comprise entre 20 et 95, de préférence entre 25 et 90 %.

9. Copolymère selon l'une des revendications 1 à 8, contenant 12 à 500, de préférence 20 à 200, motifs structurels qui sont sélectionnés parmi le motif structurel de base (A) et le motif structurel dérivé de l'acide dicarboxylique (B).

10. Préparation d'un copolymère selon l'une des revendications 1 à 9, **caractérisée en ce que** l'on prépare d'abord un pré-produit de copolymère par polymérisation, suite à quoi les substituants de type (I), (II), et/ou (III) du motif structurel dérivé de l'acide dicarboxylique (B) sont formés par greffage ultérieur.

11. Préparation selon la revendication 10, **caractérisée en ce que** le greffage ultérieur est conduit par l'utilisation de mesures libérant l'eau de la réaction, de préférence par chauffage à une température comprise entre 120 et 200 °C, jusqu'à ce que la fraction molaire des motifs structurels qui appartiennent au groupe composé de (I-1), (1-2), (I-3), (I-4), (I-5) et (I-6), sur la base de la totalité des motifs structurels que compte le motif structurel dérivé de l'acide dicarboxylique (B), soit au moins égale à 5 %, de préférence au moins égale à 10 %, de façon particulièrement préférée au moins égale à 25 %.

12. Dispersion qui contient un milieu dispersant et des solides particulaires dispersés, qui se présente de préférence sous la forme d'une charge inorganique, et/ou sous la forme d'un pigment inorganique ou organique et/ou sous la forme de nano-tubes de carbone et/ou sous la forme de graphènes, où, sur la base du poids total de la dispersion, 0,1 à 10 % en poids, de préférence 0,3 à 4,5 % en poids, d'un copolymère selon l'une des revendications 1 à 9, sont utilisés en tant qu'agent mouillant et agent dispersant.

13. Dispersion selon la revendication 12, qui se présente sous la forme d'une encre ou d'un agent de revêtement, en particulier d'une laque.

14. Préparation particulaire contenant 30,0 à 99,9 % en poids de solides particulaires, ainsi que 0,1 à 70,0 % en poids d'un copolymère selon l'une des revendications 1 à 9.

15. Utilisation d'un copolymère selon l'une des revendications 1 à 9, en tant qu'agent mouillant et dispersant.
